# EUROPÄISCHE PATENTSCHRIFT

(11) **EP 4 092 284 B1**
(45) Veröffentlichungstag und Bekanntmachung des Hinweises auf die Patenterteilung: **27.03.2024**
(21) Anmeldenummer: 21175306.6
(22) Anmeldetag: 21.05.2021
(51) Int. Cl.: F16D 3/68, F16D 3/70

(54) **ELASTISCHE KLAUENKUPPLUNG**
ELASTIC CLAW COUPLING
EMBRAYAGE À GRIFFES ÉLASTIQUES

(43) Veröffentlichungstag der Anmeldung: 23.11.2022
(73) Patentinhaber: Centa-Antriebe Kirschey GmbH, 42781 Haan (DE)
(72) Erfinder: HASAN, Mahamudul, 44803 Bochum (DE); FITSCH, Martin, 42115 Wuppertal (DE)
(74) Vertreter: V.O.

(56) Entgegenhaltungen:
- EP-A2- 2 700 835
- DE-A1- 19 623 184
- JP-U- S53 101 956

## Beschreibung

Vorliegende Erfindung betrifft eine elastische, um eine Rotationsachse Ax rotierbare Klauenkupplung zur Übertragung eines um die Rotationsachse wirkenden Drehmoments M von einem Antriebsmittel auf ein Abtriebsmittel, mit einem ersten Kupplungselement, das über einen ersten Umfang U₁ verteilte, hervorstehende erste Klauen und von diesen gebildete erste Zwischenräume aufweist, und einem relativ zum ersten Kupplungselement drehbar rotierbaren zweiten Kupplungselement, das über einen zweiten Umfang U₂ verteilte, hervorstehende zweite Klauen und von diesen gebildete, zweite Zwischenräume aufweist, wobei die ersten Klauen und die zweiten Klauen miteinander in wechselseitigem Eingriff stehen und Aufnahmeräume begrenzen, in denen elastische Druckkörper derart einsetzbar sind, dass sie das erste Kupplungselement elastisch, drehmomentübertragend mit dem zweiten Kupplungselement kraftkoppeln, wobei eine Mehrzahl der ersten Klauen und zweiten Klauen derart ausgebildet ist, dass eine Mehrzahl an Aufnahmeräumen in Bezug auf die Rotationsachse Ax in Umfangsrichtung Ru und in Radialrichtung R_{R} aufeinanderfolgend angeordnet ist.

Derartige Klauenkupplungen sind aus dem Stand der Technik bekannt. Sie erlauben eine elastische Übertragung von Drehmomenten zwischen dem ersten und zweiten Kupplungselement. Die Kupplungselemente können dabei beispielsweise an Schwungscheiben, Wellen, Flanschen oder dergleichen Elementen der Antriebs- bzw. Abtriebsmittel befestigt sein. Eine Befestigung ist lösbar, aber auch fest möglich. Die Druckkörper werden meist spielfrei zwischen den Kupplungselementen bzw. deren Klauen angeordnet, sodass sie auf eine Relativbewegung zwischen erstem Kupplungselement und zweitem Kupplungselement unter Pressung des zwischengelagerten Druckkörpers ansprechen und so unter Verformung des Druckkörpers das Drehmoment übertragen. Nach Absetzen des wirkenden Drehmoments erfolgt eine Rückstellung des Relativabstands zwischen den beiden ersten und zweiten Klauen durch das elastische Rückverformen des Druckkörpers. Als nachteilig hat sich bei solchen Konstruktionen der Verschleiß der Druckkörper herausgestellt, und insbesondere ein Verschleiß, wenn es gilt, eine möglichst elastische Klauenkupplung zur Verfügung zu stellen. Konstruktionen, die sich diesem Problem widmen, resultieren meist in sehr aufwendigen und teuren Kupplungen.

Die DE 196 23 184 A1 offenbart eine zweiteilige, halbflexible Wellenkupplung beispielsweise für einen Schiffsantrieb. Ein erster Teil weist einen kreisförmigen Flansch mit in Abständen von 120 Grad nach innen gerichteten Vorsprüngen auf, die mit korrespondierenden nach außen gerichteten Vorsprüngen eines Flansches zweiten Teils kämmen. In den Zwischenräumen zwischen den Vorsprüngen sind elastische Drucckörper eingesetzt. Die Druckkörper weisen auf ihren nach innen und außen gerichteten Seiten konkave Flächen auf. Vorsprünge und Druckkörper sind jeweils durch einen drehmomentstarken, flexiblen Bolzen verbunden, der teilweise in jeden Drucckörper und jeden Vorsprung eingelassen ist, und ein begrenztes Spiel zwischen den Komponenten ermöglicht.

Die EP 2 700 835 A2 offenbart eine elastische Kupplung, umfassend einen vorzugsweise als Flanschanschluss ausgebildeten metallischen Außenring und einen vorzugsweise als Anschraubflansch ausgebildeten, nabenartigen metallischen Innenring, wobei ein konzentrisch auf dem Innenring angeordnetes elastisches Drehmomentübertragungsmittel mit zahnartigen Radialvorsprüngen in die Flanken der zahnartigen Radialvorsprünge mit ihren Endwänden einschließende Innentaschen des Außenrings eingreift. Hierzu ist der Innenring als Flügelnabenring mit mindestens zwei in Umfangsrichtung voneinander beabstandeten, das elastische Drehmomentübertragungsmittel in Segmente unterteilenden Mitnehmerstegen ausgebildet, die in gegenüber den Innentaschen der zahnartigen Radialvorsprünge in Umfangsrichtung mit einem größeren Kammermaß vorgesehene Mitnehmerstegtaschen hineinragen und bei unbelasteter Kupplung eine von den Endwänden der Mitnehmerstegtaschen entfernte Position einnehmen, wobei den Mitnehmerstegen elastische, in den Dreh-Endlagen zur Wirkung kommende, nockenartige Puffermittel zugeordnet sind.

Aufgabe der Erfindung ist es, eine elastische Klauenkupplung zur Verfügung zu stellen, die eine hochelastische Kopplung und insbesondere eine hochelastische Drehmomentenübertragung zwischen Antriebs- und Abtriebsmittel erlaubt.

Diese Aufgabe wird durch eine elastische Klauenkupplung gemäß dem unabhängigen Anspruch gelöst.

Insbesondere wird diese Aufgabe gelöst durch eine Elastische, um eine Rotationsachse Ax rotierbare Klauenkupplung zur Übertragung eines, um die Rotationsachse wirkenden Drehmoments, von einem Antriebsmittel auf ein Abtriebsmittel, mit:
einem ersten Kupplungselement, das über einen ersten Umfang verteilte, hervorstehende erste Klauen und, von diesen gebildete erste Zwischenräume aufweist, und einem relativ zum ersten Kupplungselement drehbar rotierbaren zweiten Kupplungselement, das über einen zweiten Umfang verteilte, hervorstehende zweite Klauen und, von diesen gebildete, zweite Zwischenräume aufweist, wobei die ersten Klauen und die zweiten Klauen miteinander in wechselseitigem Eingriff stehen und Aufnahmeräume begrenzen, in denen elastische Druckkörper derart einsetzbar sind, dass sie das erste Kupplungselement elastisch, drehmomentübertragend mit dem zweiten Kupplungselement kraftkoppeln, wobei eine Mehrzahl der ersten Klauen und zweiten Klauen derart ausgebildet ist, dass eine Mehrzahl an Aufnahmeräumen in Bezug auf die Rotationsachse in Umfangsrichtung und in Radialrichtung aufeinanderfolgend angeordnet ist, und wobei eine Mehrzahl der ersten Klauen und/oder zweiten Klauen Führungselemente (50) aufweist, über die die Druckkörper in den Aufnahmeräumen entlang einer Achse coaxial zur Rotationsachse Ax liniengelagert sind, wobei eine Mehrzahl der Führungselemente aus Wandflächen und insbesondere Druckkörper-Lagerflächen der ersten Klauen und/oder der zweiten Klauen hervorsteht.

Die hier angesprochenen Umfänge U₁ und U₂ betreffen im Wesentlichen ringförmige Bereiche, die um die Rotationsachse Ax herumlaufen und am ersten bzw. zweiten Kupplungselement ausgebildet sind. Innerhalb des jeweiligen ringförmigen Bereichs sind die angesprochenen ersten und zweiten Klauen ausgebildet. Die Klauen können unterschiedliche Geometrien haben, wie im Folgenden noch im Detail definiert ist. Sie überlappen sich wenigstens teilweise in einer Sichtrichtung coaxial zur Rotationsachse.

Wie beschrieben, bilden die jeweiligen ersten und zweiten Klauen Zwischenräume. Solche Zwischenräume entstehen beispielsweise, wenn die Klauen aus Basisebenen der Kupplungselemente hervorstehen. Unter wechselseitigem Eingriff wird verstanden, dass die ersten Klauen unter anderem in Zwischenräume, gebildet durch die zweiten Klauen, eingreifen und die zweiten Klauen in Zwischenräume, gebildet durch die ersten Klauen. Zwischen den so in Eingriff stehenden Klauen sind in bestimmten Bereichen die Druckkörper angeordnet.

Das erste Kupplungselement ist drehbar rotierbar zum zweiten Kupplungselement gelagert. Beim Anliegen eines Drehmoments M wirkt seitens des Antriebsmittels eine Rotationskraft auf das erste Kupplungselement, das die ersten Klauen unter Kompression der in den Aufnahmeräumen gelagerten Druckkörper auf die zweiten Klauen zubewegt und so elastisch das Drehmoment auf das Kupplungselement überträgt. Es ist auch eine gegenläufige Bewegung mit entsprechend gegenläufiger Kompression weitere Druckkörper, und insbesondere Rückschlagkörpern, wie sie im Folgenden noch beschrieben werden, denkbar.

Vorzugsweise stehen die Druckkörper mit den jeweiligen Klauen, im unbelasteten Zustand der Klauenkupplung, also insbesondere ohne wirkendes Drehmoment M, in spielfreier Kopplung. Dies führt dazu, dass bei einem Anliegen des Drehmoments M, eine sofortige Aktivierung der Pressung der Druckkörper durch eine Relativbewegung zwischen erstem und zweiten Kupplungskörper und somit ersten und zweiten Klauen erfolgt. Per Definition bewegen sich bei Anliegen des Drehmoments die ersten und zweiten Klauen bzw. die Bereiche, in denen die Druckkörper an den Klauen anstehen, aufeinander zu. Beim Abnehmen bzw. Entfernen des Drehmoments bewegen sich die Klauen in diesen Bereichen optional wieder voneinander weg. Beispielsweise bewegt sich eine erste Klaue beim Anliegen des Drehmoments M auf eine vorauslaufende zweite Klaue zu, während sie sich von einer nachlaufenden zweiten Klaue entfernt. Dies geschieht optional in umgekehrter Weise beim Abnehmen des Drehmoments.

Durch die erfindungsgemäße Ausbildung einer Mehrzahl an Aufnahmeräumen, die in den zuvor beschriebenen Umfangsbereichen sowohl in Umfangsrichtung in serieller Abfolge als auch in Radialrichtung serieller Abfolge angeordnet sind, ergibt sich so, optional, in Umfangsrichtung betrachtet, eine Parallelschaltung von Druckkörpern und insofern eine Parallelschaltung von Federn. In Radialrichtung betrachtet, ergibt sich, insbesondere in Kombination dazu, eine Reihenschaltung von Druckkörpern bzw. Federn. Diese Kombination führt zu einer Klauenkupplung mit einem sehr genauen und sehr weichen Ansprechverhalten. Insbesondere ist es bei einer solchen Ausbildung nicht nötig, Druckkörper zu verwenden, die aufgrund ihrer Bauweise ein sehr weiches Verhalten der Klauenkupplung ermöglichen würden. Solche weichen Drucckörper weißen einen sehr hohen Verschleiß auf. Die erfindungsgemäße Klauenkupplung weist dagegen eine sehr hohe Verschleißfestigkeit und darüber hinaus eine sehr hohe Verlustleistung auf. Derartige Verschleißfestigkeit, feines Ansprechverhalten und hohe Verlustleistung sind aus dem Stand der Technik bei keiner bekannten Klauenkupplung gleicher Baugröße bekannt.

Der Begriff "weich" steht hier für eine Eigenschaft, die klassifiziert, dass bei der erfindungsgemäßem Klauenkupplungen im Vergleich zu Klauenkupplungen gleicher Baugröße und identischem Anwendungsbereich, wie sie beispielsweise aus dem Stand der Technik bekannt sind, bei Einwirken sehr viel geringer Momente, die selbe Auslenkung bzw. Bewegung der ersten Klauen relativ zur den zweiten Klauen möglich ist.

Optional ist das erste und/oder zweite Kupplungselement als Ringelement ausgeführt, das die Rotationsachse Ax ringförmig umläuft. Optional weist es eine Basisebene auf die die Rotationsachse ringförmig umläuft. Unter Rotationsachse Ax wird hier im Wesentlichen eine durch die beiden Kupplungselemente definierte Achse verstanden, um die sich die Kupplung dreht. Beim Vorliegen von Achs- und/oder Winkelversatz wird hier eine idealisierte gemeinsame Rotationsachse Ax angenommen, wobei sich die einzelnen Rotationsachsen der Kupplungselemente in diesem Fall geringfügig von der idealisierten Rotationsachse Ax abweichend erstrecken können.

Optional sind die Klauen integral mit einer Basisebene des Kupplungselements ausgebildet. Dies gilt für die ersten Klauen und/oder die zweiten Klauen.

Eine solche Basisebene kann beispielsweise ein Ring sein und insbesondere ein Ring, der Befestigungsmittel aufweist, um das jeweilige Kupplungselement am Abtriebsmittel bzw. Antriebsmittel zu befestigen.

Die Kupplungselemente können beispielsweise an Schwungscheiben, Wellen, Flanschen oder dergleichen Elementen der Antriebs- bzw. Abtriebsmittel befestigt sein. Sie können hierfür integrale Aufnahmen aufweisen, oder über geeignete Adapterelement angeschlossen werden. Eine Befestigung ist lösbar, aber auch fest möglich.

Es ist möglich, dass eine Mehrzahl der ersten Klauen und/oder zweiten Klauen koaxial zur Rotationsachse Ax aus den Kupplungselementen hervorsteht. Die ersten und/oder zweiten Klauen können derart aus wenigstens einer (Boden-)Ebene pro Kupplungselement in insbesondere in Axialrichtung hervorstehen, dass sich zwischen den Klauen die genannten Zwischenräume bilden. Ein Hervorstehen kann auch in Radialrichtung bei wenigstens einer Mehrzahl der ersten und/oder zweiten Klauen gegeben sein. Grundsätzlich stehen die ersten und/oder zweiten Klauen derart aus den Kupplungselementen oder Basisebenen derselben hervor, dass sie miteinander in Eingriff kommen können. Basisebenen können jedwede Bauteile sein, die als Träger für die Klauen und zum Anschluss and Antriebs bzw. Abtriebs mittel geeignet sind.

Für eine Mehrzahl der ersten und zweiten Klauen ergibt sich so eine wechselseitige Anordnung der ersten und zweiten Klauen. Beispielsweise sind in einer Ansicht in Richtung der Rotationsachse die ersten und zweiten Klauen abwechselnd hintereinander in Umfangsrichtung verlaufend angeordnet. Es ist auch denkbar, dass die ersten und zweiten Klauen in Radialrichtung hintereinander angeordnet sein können. Es ist zudem möglich, wenigstens eine erste Klaue, gefolgt von wenigstens einer zweiten Klaue und wieder gefolgt von wenigstens einer ersten Klaue in Bezug auf die Umfangsrichtung seriell und/oder parallel anzuordnen. Selbiges gilt für entsprechende Teil dieser Klauen und insbesondere für die im Folgenden noch definierten optional vorhandenen Wandelemente der Klauen.

Es ist denkbar, dass eine Mehrzahl der ersten Klauen in Richtung des zweiten Kupplungselements und/oder eine Mehrzahl der zweiten Klauen in Richtung des ersten Kupplungselements hervorstehen. Stehen die ersten Klauen in Richtung des zweiten Kupplungselements und die zweiten Klauen in Richtung des ersten Kupplungselements vor, greifen die jeweiligen Klauen optional entlang der Achse, in der sie hervorstehen, in die gegenüberliegenden Zwischenräume ein. Diese Achse verläuft optional coaxial zur Rotationsachse Ax.

Es ist denkbar, dass eine Mehrzahl der ersten Klauen und zweiten Klauen in Radialrichtung R_{R} innen liegende Aufnahmeräume und radial weiter außen liegende Aufnahmeräume definiert. Die weiter innen liegenden Aufnahmeräume liegen optional auf einer kleineren Kreisbahn um die Rotationsachse Ax als die weiter außen liegenden Aufnahmeräume.

Es ist denkbar, dass die Anzahl der weiter innen liegenden Aufnahmeräume der Anzahl der weiter außen liegenden Aufnahmeräume entspricht. Weiter ist es denkbar, dass die weiter innen liegenden Aufnahmeräume in Umfangsrichtung kürzer sind als die weiter außen liegenden Aufnahmeräume. Es ist allerdings auch denkbar, dass die jeweiligen Aufnahmeräume gleich und insbesondere geometrisch identisch ausgebildet sind. Dies gilt optional für die inneren Aufnahmeräume zueinander, für die äußeren Aufnahmeräume zueinander oder für die äußeren und inneren Aufnahmeräume zueinander. Auch ist eine unterschiedliche Anzahl der inneren und äußeren Aufnahmeräume denkbar. Darüber hinaus ist auch die Ausbildung mehrerer in Radialrichtung hintereinander ausgebildeter Aufnahmeräume und somit eine Mehrzahl durch diese Aufnahmeräume gebildete Kreisbahnen denkbar. Auch hier wird dann von inneren und äußeren Aufnahmeräumen gesprochen. Ganz grundsätzlich ist es denkbar, die Aufnahmeräume auf Kreisbahnen um die Rotationsachse anzuordnen. Die Aufnahmeräume laufen optional in Umfangsrichtung, einem Kreisradius um die Rotationsachse folgend. Sie sind optional Kreisbogenförmig ausgebildet. Es ist aber auch denkbar, die Aufnahmeräume als Tangenten zu diesen Kreisbahnen und insbesondere gerade auszubilden. Zudem ist jede andere Art von abgewinkeltem Verlauf (in Bezug auf die Umfangsrichtung) denkbar. Selbiges gilt für den Verlauf in Radialrichtung.

Die Aufnahmeräume weisen optional in einer Richtung koaxial zur Rotationsachse eine Tiefe auf, die durch die jeweilige Hervorstehlänge der Klauen in Richtung der Rotationsachse und die durch sie gebildeten Zwischenräume bzw. die Tiefe des Eingreifens der Klauen in die jeweiligen Zwischenräume der anderen Klauen definiert wird. Optional stehen die Klauen nicht in direktem Kontakt zueinander. Sie sind optional ausschließlich über die Druckkörper kraftgekoppelt. Dies kann in Umfangsrichtung, in Richtung koaxial zur Rotationsachse als auch in Radialrichtung gegeben sein.

Es ist denkbar, dass die Klauenkupplung in eine Mehrzahl an Kreissektoren S, insbesondere identische Kreissektoren, aufgeteilt ist, die sich von der Rotationsachse Ax in Radialrichtung R_{R} nach außen erstrecken. Auch ist es denkbar, dass die Kreissektoren S insbesondere gleichmäßig über den Umfang der Klauenkupplung verteilt sind. Es ist zudem denkbar, dass pro Kreissektor S jeweils ein innen liegender Aufnahmeraum und ein außen liegender Aufnahmeraum ausgebildet ist. Es ist denkbar, dass eine Anzahl an Kreissektoren derart ausgebildet ist, dass sich jeweils zwei Kreissektoren in Bezug auf die Rotationsachse gegenüberliegen.

Es ist denkbar, dass eine Mehrzahl an Aufnahmeräumen in Radialrichtung R_{R} beidseitig durch wenigstens zwei erste Klauen oder wenigstens zwei zweite Klauen begrenzt wird. Auch ist es denkbar, dass eine Mehrzahl an Aufnahmeräumen durch wenigstens eine erste Klaue und wenigstens eine zweite Klaue begrenzt wird. Selbiges ist auch gegeben, wenn die Klauen, wie im Folgenden noch im Detail beschrieben, Wandelemente umfassen.

Erste und/oder zweite Klauen können wenigstens eine Wandelement aufweisen. Diese Wandelemente sind optional Teilelemente einer Klaue, also einer ersten und/oder einer zweite Klaue. Für die Ausbildung und Anordnung der Wandelemente kann als das gelten, was in Bezug auf die Klauen hierin definiert ist. Mehrere Wandelement können zusammen wenigstens eine Klaue bilden. Sie können insbesondere einstückig miteinander verbunden sein. Sie können aber auch lediglich derart benachbart zueinander ausgebildet sein, dass sie als eine Klaue, wie sie hierin definiert ist wirken. Es ist denkbar, dass sich eine Mehrzahl in Umfangsrichtung verlaufender Wandflächen bogenförmig und insbesondere Kreisbogenförmig erstreckt. Es denkbar, dass eine Mehrzahl an ersten und/oder zweiten Klauen derart nahe zusammen oder integral miteinander ausgebildet sind, dass sich eine gemeinsame erste Klaue bzw. zweite Klaue ergibt. Auch dieser Fall ist hiermit umfasst. Neben einer direkt benachbarten Anordnung erster und/oder zweiter Klauen zur Bildung eines Aufnahmeraums ist auch eine Ausbildung denkbar, bei der erste und zweite Klauen bzw., wie gerade beschrieben, Wandelemente der ersten und zweiten Klauen benachbart zueinander derart angeordnet sind, dass sie wenigstens einen Aufnahmeraum definieren.

Es ist denkbar, dass eine Mehrzahl an Aufnahmeräumen in Umfangsrichtung durch erste und zweite Klauen begrenzt wird. Aufnahmeräume sind optional derart ausgebildet, dass sie in ihrer Geometrie durch das Anliegen bzw. Entfernen des Drehmoments veränderbar sind. Über eine solche Geometrieveränderung, beispielsweise die Veränderung einer Länge, Tiefe und/oder Breite, erfolgt optional eine Pressung der Druckkörper und somit eine elastische Kraftkopplung.

Es ist denkbar, dass eine Mehrzahl an Aufnahmeräumen als sich in Umfangrichtung Ru erstreckende Aufnahmetaschen ausgebildet sind, aus denen die dort eingesetzten Druckkörper hervorstehen, sodass sie beim Einwirken des Drehmoments M zwischen ersten und zweiten Klauen zusammengedrückt und insbesondere in die Aufnahmetaschen eingedrückt werden. Die Aufnahmetaschen können beispielsweise durch erste Klauen bzw. deren Wandelemente und/oder durch zweite Klauen und insbesondere deren Wandelemente gebildet werden. Auch ist es denkbar, dass die Drucckörper und die Aufnahmetaschen derart angeordnet und ausgebildet sind, dass die Druckkörper um eine Achse, insbesondere orthogonal zur Rotationsachse, und weiter insbesondere in Radialrichtung verbogen werden. Ein Verbiegen kann derart erfolgen, dass sich eine Längsachse der Druckkörper einer Kreisbogenform annähert bzw. eine solche einnimmt.

Es ist denkbar, dass eine Mehrzahl an Aufnahmeräumen sich in Umfangsrichtung Ru länger erstreckt als in Radialrichtung R_{R}. Insbesondere in diesem Zusammenhang ist es denkbar, dass sich eine Mehrzahl der Druckkörper in Umfangsrichtung Ru länger erstreckt als in Radialrichtung R_{R}. Die Klauen bzw. deren Anordnung ist derart ausgebildet, dass eine Relativbewegung der die Aufnahmeräume bildenden Klauen bzw. Wandelemente möglich ist, um die geforderte Pressung des im Aufnahmeraum eingesetzten Druckkörpers zu ermöglichen.

Optional ist bei einer Mehrzahl an Aufnahmeräumen wenigstens ein Druckkörper pro Aufnahmeraum und insbesondere genau ein Druckkörper pro Aufnahmeraum angeordnet.

Wie bereits erwähnt, ist es denkbar, dass eine Mehrzahl der ersten Klauen und/oder zweiten Klauen als Wandelemente ausgebildet sind oder Wandelemente aufweisen, die sich in Radialrichtung R_{R} und/oder in Umfangsrichtung Ru erstrecken. Es ist auch möglich, Wandelemente in Richtungen abweichend davon auszubilden und insbesondere solche Wandelemente, die die in Radialrichtung R_{R} und/oder in Umfangsrichtung Ru verlaufenden Wandelemente verbinden. Auch ist es denkbar, die in Umfangsrichtung Ru verlaufenden Wandelemente über die in Radialrichtung R_{R} verlaufenden Wandelemente zu verbinden. Hier ist insbesondere eine einstückige Ausbildung der Wandelemente denkbar.

Es ist denkbar, dass eine Mehrzahl der ersten Klauen und/oder zweiten Klauen Wandflächen aufweist, die die Aufnahmeräume begrenzen und die sich in koaxial zur Rotationsachse Ax verlaufenden Ebenen erstrecken. Koaxial zur Rotationsachse verlaufende Ebenen sind solche Ebenen, die eine Achse einschließen, die zur Rotationsachse achsparallel verläuft. Die Wandflächen können Teil der Wandelemente sein. Optional sind bei wenigstens einem Wandelement bzw. wenigstens einer Klaue Wandflächen parallel zueinander ausgebildet. Bei einem sich in einer Längsrichtung erstreckenden Wandelement ist dies beispielsweise bei linksseitig und rechtsseitig ausgebildeten Wandflächen möglich. Es ist denkbar, dass ein Wandelement bzw. eine Klaue sich mit planen Wandflächen, insbesondere mit coplanaren, gegenüberliegenden Wandflächen aus dem Kupplungselement hervorstehend erstreckt. Es ist auch denkbar, die Klauen bzw. Wandelemente so auszubilden, dass sie in Richtung des Kupplungselements, aus dem sie hervorstehen, die Klaue verbreiternd bzw. verschmälernd ausgebildet sind. Die Wandelemente bzw. Wandflächen sind vorzugsweise Ebenen. Es ist auch denkbar, in den Wandflächen Vertiefungen, Krümmungen oder dergleichen Senken oder Vorsprünge auszuführen. Dies ist beispielsweise bei den im Folgenden noch beschriebenen Führungselementen der Fall. Es ist denkbar, dass eine Mehrzahl der ersten Klauen und/oder zweiten Klauen Wandflächen aufweist, die sich in Radial- oder in Umfangsrichtung verlaufenden insbesondere in Umfangsrichtung gebogen verlaufenden Ebenen erstrecken.

Es ist denkbar, dass bei einer Mehrzahl der ersten Klauen Wandflächen vorgesehen sind, die als erste Druckkörper-Lagerflächen ausgebildet sind, und bei einer Mehrzahl der zweiten Klauen Wandflächen vorgesehen sind, die als zweite Druckkörper-Lagerflächen ausgebildet sind, und die derart zueinander ausgerichtet sind, dass sie sich beim Anliegen eines zu übertragenden Drehmoments M, unter Zusammenpressen eines zwischen den Druckkörper-Lagerflächen kraftgekoppelten Druckkörpers aufeinander zu bewegen. Die Druckkörper sind an den Druckkörper-Lagerflächen optional lösbar angeordnet und insbesondere stehen sie spielfrei an diesen Druckkörper-Lagerflächen an. Optional sind die Druckkörper derart ausgebildet, dass sie die ersten und zweiten Kupplungselemente relativ zueinander vorspannen, und insbesondere gegen Rückschlagkörper vorspannten, sodass zwischen ersten Klauen und zweiten Klauen im Wesentlichen kein Spiel besteht.

Es ist denkbar, dass bei einer Mehrzahl der ersten Klauen Wandflächen vorgesehen sind, die als erste Druckkörper-Führungsflächen ausgebildet sind, und bei einer Mehrzahl an zweiten Klauen Wandflächen vorgesehen sind, die als zweite Druckkörper-Führungsflächen ausgebildet sind, und die derart zueinander ausgerichtet sind, dass sie sich beim Anliegen eines zu übertragenden Drehmoments M relativ zueinander in Umfangsrichtung Ru bewegen. Optional gleiten dabei die gegenüberliegenden Wandflächen auf Kreisbahnen relativ zueinander entlang, die einen gemeinsamen Mittelpunkt, nämlich die Rotationsachse, aufweisen. Auch ist es denkbar, dass die Druckkörper-Führungsflächen derart ausgebildet sind, dass sich die Druckkörper bim Anliegen eines Drehmomentes relativ zu diesen bewegen, bzw. in Teilbereichen an diesen entlanggleiten.

Beim Zusammenpressen der Druckkörper gleiten die Druckkörper optional an wenigstens einer dieser Wandflächen entlang. Insbesondere bei der Ausbildung der Aufnahmeräume als Taschen werden die Druckkörper entlang der Wandflächen in die jeweiligen Taschen eingedrückt.

Aufgrund der in Umfangsrichtung erfolgenden Pressung ist es denkbar, die Druckkörper so auszubilden, dass sie in einer Ausweichbewegung radial gegen diese Druckkörper-Führungsflächen gedrückt werden. Selbiges ist durch das Auftreten und auf die Druckkörper wirkenden Fliehkraft denkbar, wobei dann die Druckkörper an die außenseitig angeordneten Druckkörper-Führungsflächen angedrückt werden.

Es ist denkbar, dass eine Mehrzahl der Aufnahmeräume von zueinander komplementären Wandflächen der ersten Klauen und/oder Wandflächen der zweiten Klauen begrenzt wird, und insbesondere derart, dass die Wandflächen in Radialrichtung nach innen und, korrespondierend dazu, in Radialrichtung R_{R} gegenüberliegend nach außen weisen. Insbesondere in diesem Zusammenhang, aber auch ganz generell, ist es denkbar, dass die Aufnahmeräume derart angeordnet sind, dass eine Bewegung des Druckkörpers in einer Richtung erfolgen kann, die im Wesentlichen orthogonal zur auf die Druckkörper wirkenden Fliehkraft ausgerichtet ist, wenn ein Drehmoment M auf die Klauenkupplung einwirkt. Das Zusammenpressen der Druckkörper erfolgt optional auf einer Kreisbahn um die Rotationsachse. Durch das Einwirken einer Fliehkraft erfolgt darüber hinaus ein Zusammenpressen in Radialrichtung, wenn auch geringfügiger als das Zusammenpressen in Umfangsrichtung.

Insbesondere ist es denkbar, dass der Druckkörper derart in einem Aufnahmeraum angeordnet ist, dass er durch die einwirkende Fliehkraft an eine nach innen weisende äußere Wandfläche eines Aufnahmeraums bzw. einer jeweiligen Klaue gedrückt wird. Grundsätzlich, wie im Folgenden auch noch im Detail beschrieben, ist es denkbar, die Lagerungen bzw. Aufnahmen für die Druckkörper derart auszubilden, dass sie beim Zusammenpressen in Umfangsrichtung und/oder beim Einwirken einer Fliehkraft gebogen und insbesondere kreisbogenförmig verformt werden, und insbesondere derart verformt werden, dass sie im verformten Zustand, in Umfangsrichtung betrachtet, eine Kreisbogenform oder dergleichen gebogene Form, die auch geringfügig von einer Kreisbogenform abweichen kann und einen um maximal 5 ° abweichenden Tangentialwinkel zur Kreisbogenform aufweisen kann, aufweisen.

Es ist denkbar, dass eine Mehrzahl der Druckkörper an in Umfangsrichtung Ru vorauslaufenden und/oder nachlaufenden Stirnseiten derart gebogen oder dergleichen spitz zulaufend ausgebildet ist, dass diese an den Druckkörper-Lagerflächen der ersten Klauen und/oder der zweiten Klauen entlang einer Achse koaxial zur Rotationsachse Ax liniengelagert oder punktgelagert sind.

Es ist denkbar, dass die Druckkörper derart ausgebildet sind, dass sie durch die jeweiligen Druckkörper-Lagerflächen ideal normalkraftbelastet sind, ohne dass insbesondere Biegemomente durch das Zusammenpressen durch die Druckkörper-Lagerflächen eingeleitet werden. Optional sind die Lagerkräfte, die in die Druckkörper von den Druckkörper-Lagerflächen eingeleitet werden, in Umfangsrichtung Ru verlaufend ausgerichtet. Sie laufen optional orthogonal zu radial angeordneten Druckkörper-Lagerflächen der ersten und/oder zweiten Klauen.

Erfindungsgemäß weisen eine Mehrzahl der ersten Klauen und/oder zweiten Klauen Führungselemente auf, über die die Druckkörper in den Aufnahmeräumen entlang einer Achse koaxial zur Rotationsachse Ax liniengelagert sind, wobei sich eine Mehrzahl der Führungselemente koaxial zur Rotationsachse erstreckt. Diese Führungselemente stehen aus Wandflächen und insbesondere Druckkörper-Lagerflächen der ersten Klauen und/oder zweiten Klauen hervor. Optional ist es denkbar, dass die Führungselemente entlang einer Achse koaxial zur Rotationsachse Ax erstreckend ausgebildet sind. Auch ist es denkbar, die Führungselemente an Wandflächen auszubilden, die sich in Umfangsrichtung Ru erstrecken.

Die Führungselemente können beispielsweise als Erhebungen ausgebildet sein. Es können an einer Wandfläche ein oder mehrere Führungselemente angeordnet sein. Optional verlaufen die Führungselemente parallel zueinander. Zudem sind die Führungselemente optional, in Umfangsrichtung betrachtet, auf einer gemeinsamen Kreisbahn angeordnet und insbesondere einer Kreisbahn, in die der Druckkörper gepresst wird, wenn auf ihn eine Fliehkraft, beispielsweise durch das anliegende Drehmoment, wirkt. Es ist auch denkbar, die Führungselemente als Punktlager auszubilden.

Die Führungselemente sind optional derart ausgebildet, dass sich zwischen anliegendem Druckkörper und angrenzenden Bereichen der Führungselemente Lüftungskanäle bilden, die insbesondere eine Kühlung der Druckkörper erlauben. Insbesondere in diesem Zusammenhang sind die Führungselemente optional voneinander beabstandet angeordnet, sodass sich zwischen ihnen ein Zwischenraum bildet. Ein solcher Zwischenraum kann in Kombination mit dem Druckkörper und angrenzenden Wandflächen einen Lüftungskanal bilden. Darüber hinaus sind die Führungselemente optional derart ausgebildet, dass sie eine Gleitlagerung für den Druckkörper bereitstellen, um so eine zwängungsfreie Kompression des Druckkörpers zu erlauben. Insbesondere in diesem Zusammenhang sind optional die Führungselemente orthogonal zur Achse gebildet, entlang derer der Druckkörper beim Anliegen eines Moments komprimiert wird.

Es ist denkbar, dass sich eine Mehrzahl in Umfangsrichtung verlaufender Wandflächen bogenförmig und insbesondere Kreisbogenförmig erstreckt.

Es ist denkbar, dass an einer Mehrzahl an radial nach innen weisenden Wandflächen eines Aufnahmeraums eine größere Anzahl an Führungselementen ausgebildet ist, als an korrespondierenden radial nach außen weisenden Wandflächen desselben Aufnahmeraums. Insbesondere ist es denkbar, dass an einer Mehrzahl radial nach innen weisenden Wandflächen eines Aufnahmeraums eine Anzahl n Führungselemente ausgebildet ist und an korrespondierenden radial nach außen weisenden Wandflächen des Aufnahmeraums eine Anzahl n - x, wobei n eine ganze Zahl > 0, x eine ganze ungerade Zahl > 0, n > 2 und x < n ist. Es ist denkbar, dass an den nach außen weisenden inneren Wandflächen eine geringere Anzahl an Führungselementen ausgebildet ist als an den nach innen weisenden äußeren Wandflächen desselben Aufnahmeraumes. Optional ist die Anzahl der Führungselemente der nach außen weisenden inneren Wandflächen um wenigstens eines geringer als die Anzahl der nach innen weisenden äußeren Wandflächen desselben Aufnahmeraumes.

Eine entsprechende Ausführung der Führungselemente an den äußeren und inneren Wandflächen erlaubt, insbesondere beim Anliegen eines Drehmoments und/oder der resultierenden Fliehkraft an den Druckkörpern, eine kreisbogenförmige Verformung des Druckelements. Eine solche Ausführungsform kann auch durch andere Elemente bereitgestellt werden. Sie ist erfindungsgemäß bei der Klauenkupplung optional vorgesehen.

Es ist denkbar, dass die Führungselemente, insbesondere beim Anliegen eines Drehmoments und/oder der resultierenden Fliehkraft an den Druckkörpern, in Teilbereiche des Druckkörpers eingepresst werden. Es ist auch denkbar, dass die Druckkörper in Zwischenräume zwischen die Führungselemente eingepresst werden. Es ist denkbar, dass das Einpressen derart erfolgt, dass sich ein Widerstand gegen eine Pressung und/oder Bewegung der Druckkörper bzw. Druckkörperteile, beispielsweise bei einer Kompression derselben, in Umfangsrichtung sukzessive erhöht, je stärker der Drucckörper in Umfangsrichtung komprimiert wird und/oder je stärker die Führungselemente in den Druckkörper eingepresst werden bzw. der Druckkörper in die Zwischenräume eingepresst wird.

Es ist denkbar, dass eine Mehrzahl der Druckkörper in einem Zustand, in den diese in den Aufnahmeräumen eingesetzt und durch keine über die Klauen einwirkende Druckkraft belastet sind und/oder durch eine über die Klauen einwirkende Druckkraft belastet sind, in Umfangsrichtung Ru länglich, insbesondere elliptisch, bohnenförmig oder dergleichen lang gestreckt, und insbesondere abgerundet geformt sind.

Es ist denkbar, dass in Bezug auf die Umfangsrichtung Ru eine Mehrzahl an Drucckörpern, die in radial innen liegenden Aufnahmeräumen angeordnet ist, in Umfangsrichtung Ru kürzer ist als eine Mehrzahl an Druckkörpern, die in radial weiter außen liegenden Aufnahmeräumen angeordnet sind. Insbesondere mit den zuvor erwähnten Kreissektoren ist eine solche Ausgestaltung positiv. Wie erwähnt, können die Kreissektoren beispielsweise durch die Stirnseitenflächen der Druckkörper und als Sektormittelpunkt der Rotationsachse definiert werden.

Es ist denkbar, dass die ersten Klauen und zweiten Klauen Rückschlag-Lagerflächen aufweisen, die derart zueinander ausgerichtet sind, dass sie sich, beim Anliegen eines dem zu übertragenden Drehmoment M entgegengesetzt wirkenden Rückschlagmoments M_{R}, unter Zusammenpressen eines zwischen den Rückschlag-Lagerflächen kraftgekoppelten Dämpfungskörpers aufeinander zu bewegen. Ein solcher Dämpfungskörper kann, insbesondere hinsichtlich seines Materials, ähnlich dem Druckkörper ausgebildet sein. Vorzugsweise ist die Shorehärte des Dämpfungskörpers höher als die Shorehärte des Druckkörpers.

Optional sind die Shorehärten der einzelnen Druckkörper identisch. Es ist jedoch auch möglich, insbesondere in Bezug auf weiter innen liegende und weiter außen liegende Druckkörper, unterschiedliche Shorehärten auszubilden. Beispielsweise können die weiter außen liegenden Druckkörper härter ausgeführt werden als die weiter innen liegenden Druckkörper. Die unterschiedlichen Härten sind dabei optional gleichmäßig über den Umfang verteilt ausgebildet. Das bedeutet, dass Druckkörper auf einem Umfangsradius dieselben Härtegrade aufweisen können.

Weitere Ausführungsformen der Erfindung ergeben sich aus den Unteransprüchen. Im Folgenden wird die Erfindung anhand von Ausführungsbeispielen beschrieben, die durch die beiliegenden Zeichnungen näher erläutert werden. Hierbei zeigen:
- Fig. 1: eine schematische Darstellung einer ersten Ausführungsform der elastischen Klauenkupplung in Kombination mit Antriebs- und Abtriebsmitteln;
- Fig. 2: eine isometrische teilgeschnittene Darstellung der Ausführungsform gemäß Fig. 1;
- Figs. 3 und 4: isometrische Explosionsdarstellungen der Ausführungsform gemäß Fig. 2;
- Fig. 5: eine teilgeschnittene Draufsicht auf die Ausführungsform gemäß Fig. 2 entlang der Rotationsachse Ax;
- Fig. 6: einen Teilschnitt durch die Ausführungsform gemäß Fig. 2 in der in Fig. 5 dargestellten Schnittführung A:A;
- Fig. 7 und 8: Detaildarstellungen der Ausführungsform gemäß Fig. 2;
- Fig. 9: eine isometrische Darstellung einer weiteren Ausführungsform der Klauenkupplung;
- Fig. 10: eine teilgeschnittene Detaildarstellung der Ausführungsform gemäß Fig. 9;
- Fig. 11: eine teilgeschnittene Draufsicht auf die Ausführungsform gemäß Fig. 9 entlang der Rotationsachse Ax;
- Fig. 12: einen Teilschnitt durch die Ausführungsform gemäß Fig. 9 in der in Fig. 11 dargestellten Schnittführung A:A; und
- Fig. 13: einen Teilschnitt durch die Ausführungsform gemäß Fig. 9 in der in Fig. 11 dargestellten Schnittführung A:A;
- Fig. 14 - 17: eine Detaildarstellung unterschiedlicher Auslenkungszustände einer Ausführungsform der Klauenkupplung; und
- Figs. 18: eine isometrische Darstellung einer weiteren Ausführungsform der Klauenkupplung;
- Fig. 19: eine teilgeschnittene Draufsicht auf die Ausführungsform gemäß Fig. 18 entlang der Rotationsachse Ax; und
- Fig. 20: Teilschnitte durch die Ausführungsform gemäß Fig. 18 in den in Fig. 20 dargestellten Schnittführungen.

Im Folgenden werden für Vergleiche und gleich wirkende Bauteile dieselben Bezugsziffern verwendet, wobei bisweilen Hochindizes ihre Anwendung finden.

Wenn nicht anders definiert, haben alle hier verwendeten Termini (einschließlich technischer und wissenschaftlicher Termini) die gleiche Bedeutung, und insbesondere eine Bedeutung, wie sie allgemein von einem Durchschnittsfachmann auf diesem Gebiet verstanden wird, wenn sie im Zusammenhang mit der Beschreibung und den Zeichnungen interpretiert werden. Es versteht sich ferner, dass Termini, wie diejenigen die in allgemein verwendeten Wörterbüchern definiert sind, in Bezug auf das hier relevante technische Gebiet interpretiert werden, und nicht in einem idealisierten oder in einem übertrieben formalen Sinn, außer dies ist explizit so definiert. In bestimmten Fällen kann auf eine detaillierte Beschreibung allseits bekannter Vorrichtungen und Verfahren verzichtet werden, um eine Redundanz der Beschreibung zu vermeiden. Die Beschreibung bestimmter Ausführungsformen und die darin verwendete Terminologie soll die Erfindung nicht einschränken. Die Singularformen "ein", "der/die/das" mögen auch die Pluralformen miteinschließen, wenn es der Kontext nicht eindeutig anders nahelegt. Der Ausdruck "und/oder" schließt jegliche und alle Kombinationen eines oder mehrerer der zugehörigen aufgelisteten Gegenstände mit ein. Es versteht sich, dass die Begriffe "umfasst" und/oder "umfassend" das Vorhandensein genannter Merkmale angeben, jedoch das Vorhandensein oder das Hinzufügen eines oder mehrerer anderer Merkmale nicht ausschließen. Ferner versteht es sich, dass wenn ein bestimmter Schritt eines Verfahrens als einem anderen Schritt folgend angegeben wird, er direkt auf diesen anderen Schritt folgen kann oder einer oder mehrere Zwischenschritte durchgeführt werden können, bevor der bestimmte Schritt ausgeführt wird, wenn das nicht anders angegeben ist. In der gleichen Weise versteht es sich, dass wenn eine Verbindung zwischen Strukturen oder Komponenten beschrieben ist, diese Verbindung direkt oder über Zwischenstrukturen oder -komponenten erfolgen kann, außer es ist anderweitig spezifiziert. Auf den Offenbarungsgehalt aller Publikationen, Patentanmeldungen, Patente und anderer hier erwähnter Literatur wird in seiner Gänze verwiesen. Im Fall eines Konflikts gilt die vorliegende Spezifikation, einschließlich ihrer Definitionen.

Die Erfindung wird hier anhand der beiliegenden Zeichnungen beschrieben, in denen Ausführungsformen der Erfindung gezeigt sind. Die Erfindung kann jedoch auch in vielen verschiedenen Formen ausgeführt sein und sollte nicht so verstanden werden, dass sie auf die hier dargelegten Ausführungsformen beschränkt ist. Vielmehr sind die Ausführungsformen hier angegeben, damit die vorliegende Offenbarung ausführlich und vollständig ist und den Umfang der Erfindung dem Fachmann in vollständiger aber beispielhafter Weise darlegt. Die Beschreibung der beispielhaften Ausführungsformen soll im Zusammenhang mit den beiliegenden Zeichnungen gelesen werden, die als Teil der ganzen schriftlichen Beschreibung gelten sollen. In den Zeichnungen kann es vorkommen, dass die absoluten und relativen Größen von Systemen, Komponenten, Schichten und Bereichen aus Gründen der Deutlichkeit übertrieben dargestellt sind. Ausführungsformen können anhand schematischer und/oder querschnittsartiger Illustrationen, idealisierter Ausführungsformen und Zwischenstrukturen der Erfindung beschrieben sein. Relative Termini sowie auch ihre Ableitungen sollten so verstanden werden, dass sie sich auf die Ausrichtung beziehen, wie sie dort in der gerade besprochenen Zeichnung beschrieben oder gezeigt ist. Diese relativen Termini dienen der übersichtlicheren Beschreibung und erfordern nicht, dass das System in einer bestimmten Ausrichtung aufgebaut oder betrieben werden muss, außer es ist explizit anders angegeben. Beliebige der offenbarten Vorrichtungen oder Teile davon können zusammen kombiniert werden oder in weitere Teile aufgeteilt werden, wenn nicht spezifisch anders angegeben. Die bloße Tatsache, dass bestimmte Maßnahmen in voneinander verschiedenen Abschnitten oder Ansprüchen aufgeführt werden, soll nicht angeben, dass eine Kombination dieser Maßnahmen nicht vorteilhafterweise vorgenommen werden kann. Insbesondere sollen alle denkbaren Kombinationen der Ansprüche als inhärent offenbart betrachtet werden. In dieser Beschreibung sind Wörter wie "im Wesentlichen", "ungefähr" oder "im Allgemeinen/allgemein" dahingehend auszulegen, dass sie mindestens Abweichungen eines Maßes von 10 % oder weniger, vorzugsweise 5 % oder weniger, oder Abweichungen von einer Form beinhalten, die für einen Fachmann auf dem Gebiet noch in den Rahmen der betreffenden Definition fallen würden, außer dies ist anderweitig spezifiziert.

Aus Gründen der Klarheit und im Sinne einer stringenten Beschreibung werden Merkmale hier meist als ein Teil einer oder getrennter Ausführungsformen beschrieben; es versteht sich jedoch von selbst, dass der Umfang der Erfindung auch Ausführungsformen enthalten kann, die Kombinationen aller oder einiger der beschriebenen Merkmale aufweisen.

Es sei erwähnt, dass bei den hier dargestellten Ausführungsformen der Klauenkupplung, ihrer Kupplungselemente und Bauteile, sämtliche Ausführungsformen gegeben sein können, wie sie zuvor im allgemeinen Teil und in Bezug auf die Ansprüche erläutert wurden.

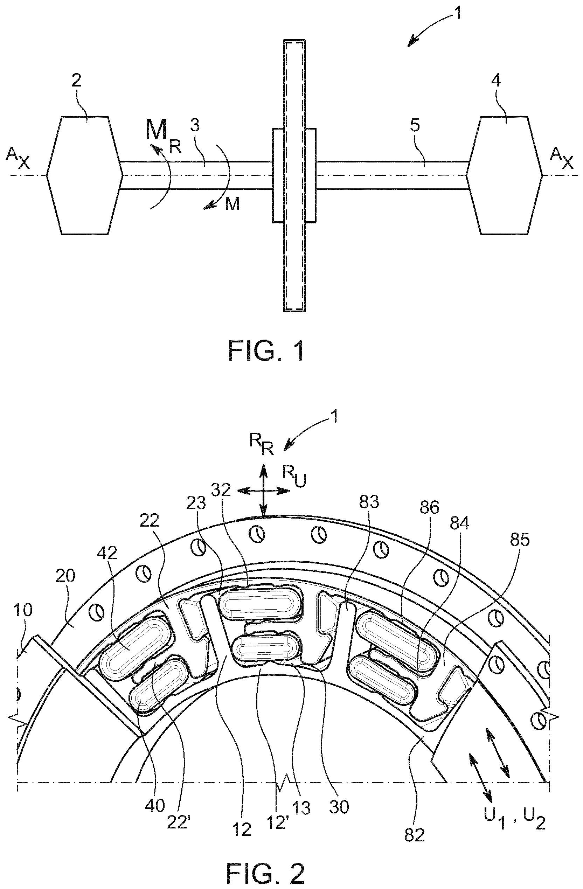

Fig. 1 zeigt eine Ausführungsform einer erfindungsgemäßen elastischen Klauenkupplung 1 zur Übertragung eines um die hier dargestellte Rotationsachse Ax von einem Antriebsmittel 2 auf ein Abtriebsmittel 4 wirkenden Drehmoments M. Die elastische Klauenkupplung 1 ist bei dieser Ausführungsform über Antriebswellen 3 bzw. Abtriebswellen 5 mit den jeweiligen Mitteln 2, 4 verbunden ist. Es sind, wie eingangs erwähnt, natürlich auch andere Anschlussarten denkbar.

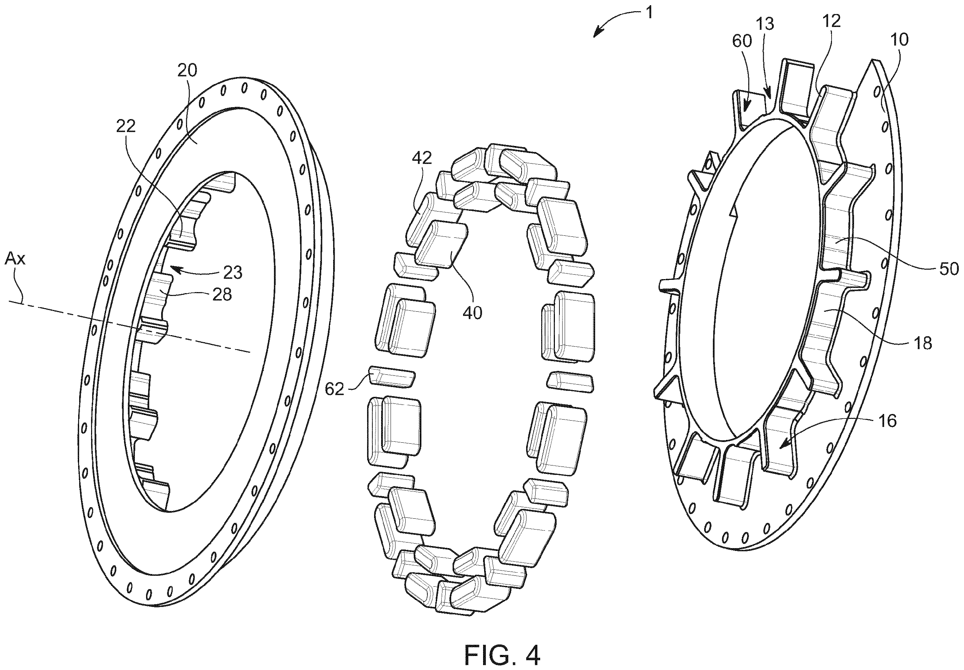

Wie in den Figs. 2 bis 8 im Detail dargestellt, weist die Klauenkupplung 1 ein erstes Kupplungselement 10 und ein zweites Kupplungselement 20 auf. Am Kupplungselement 10 ist über einen Umfang U₁ eine Mehrzahl an ersten Klauen 12 ausgebildet, die aus dem Kupplungselement 10 hervorstehen. Die hervorstehenden ersten Klauen 12 bilden erste Zwischenräume 13. Am zweiten Kupplungselement 20 sind, entsprechend zum ersten Kupplungselement 10, über einen zweiten Umfang U₂ verteilte, hervorstehende zweite Klauen 22 und von diesen gebildete zweite Zwischenräume 23 ausgebildet. Die Zwischenräume 13 der ersten Klauen und die Zwischenräume 23 der zweiten Klauen weisen geometriebedingt Überschneidungsräume auf.

Die ersten Klauen 12 und die zweiten Klauen 22 stehen miteinander in wechselseitigem Eingriff und bilden Aufnahmeräume 30, 32, in denen elastische Druckkörper 40, 42 einsetzbar bzw. eingesetzt sind. Die Druckkörper 40, 42 sind derart angeordnet und ausgebildet, dass sie das erste Kupplungselement 10 elastisch, drehmomentübertragend mit dem zweiten Kupplungselement 20 kraftkoppeln. Dies ist unter anderem möglich, da das erste Kupplungselement 10 drehbar rotierbar zum zweiten Kupplungselement 20 gelagert ist. Beim Anliegen eines, beispielsweise in Fig. 1 dargestellten, Drehmoments M wirkt seitens des Antriebsmittels 2 eine Rotationskraft auf das erste Kupplungselement 10, das die ersten Klauen 12 unter Kompression der in den Aufnahmeräumen 30, 32 gelagerten Druckkörper 40, 42 auf die zweiten Klauen 22 zubewegt und so elastisch das Drehmoment auf das Kupplungselement 20 überträgt. Optional wirkt beim Nachlassen des Drehmoments M bzw. beim Entfernen des Drehmoments M oder beim Auftreten eines Rückschlagmoments M_{R} eine Rückstellkraft aufgrund der Elastizität der Druckkörper 40, 42, die die beiden ersten und zweiten Klauen 12, 22 wieder voneinander wegbewegt. Es sei erwähnt, dass, wenn auf die ersten und zweiten Klauen Bezug genommen wird, auch Teilbereiche von diesen Klauen gemeint sein können.

Erfindungsgemäß ist eine Mehrzahl der ersten Klauen 12 und zweiten Klauen 22 derart ausgebildet, dass eine Mehrzahl an Aufnahmeräumen 30, 32 in Bezug auf die Rotationsachse Ax in Umfangsrichtung Ru und in Radialrichtung R_{R} aufeinanderfolgend angeordnet ist.

Dargestellt ist unter anderem, dass die ersten und zweiten Klauen 12, 22 derart aus den ersten und zweiten Kupplungselementen 10, 20 hervorstehen bzw. aus entsprechenden Ringelementen hervorstehen, dass sie in die gegenüberliegenden Zwischenräume 23, 13 der anderen Klauen 20, 12 eingreifen und so die Aufnahmeräume 30, 32 bilden, in die die Druckkörper 40, 42 eingesetzt werden können, so dass das erste Kupplungselement mit dem zweiten Kupplungselement kraftgekoppelt ist. Bei dieser Ausführungsform stehen die Klauen 12 des einen Kupplungselements 10 in Richtung des anderen, gegenüberliegenden Kupplungselementes 20 hervor, und umgekehrt. Es bildet sich durch die ersten und zweiten Klauen bzw. die jeweiligen Zwischenräume eine Verzahnung, die spielbehaftet ist und das Einsetzen der Druckkörper zur Reduktion dieses Spiels und optional zum Ausgleich dieses Spiels erlaubt. Aufgrund der Anordnung der ersten und zweiten Klauen weist die Klauenkupplung zudem eine Überlastsicherung auf, beispielsweise bei Versagen der Druckkörper, da dann die ersten Klauen direkt mit den zweiten Klauen in Kontakt treten und eine Drehmomentenübertragung garantieren.

Beim Auftreten eines (siehe Fig. 1) wirkenden Rückschlagmoments M_{R} tritt optional ebenfalls eine Kraftkopplung und insbesondere eine Dämpfung auf, da an den ersten Klauen 12 und den zweiten Klauen 22 optional Rückschlag-Lagerflächen 60 ausgebildet sind, zwischen denen ein Dämpfungskörper 62 derart kraftgekoppelt anordbar ist, dass es beim Einwirken des Rückschlagmoments und ein aufeinander Zubewegen der ersten und zweiten Klauen (in Rückwärtsrichtung) eine dämpfende Kraftkopplung übernimmt.

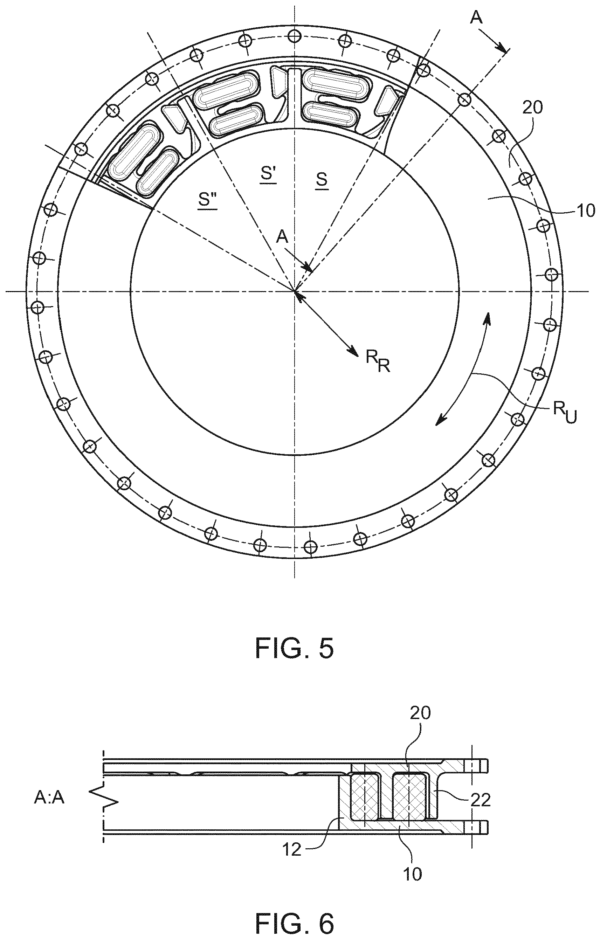

Wie in den Figs. 2 bis 8 verdeutlicht, weist die erfindungsgemäße Klauenkupplung eine Mehrzahl in Radialrichtung R_{R} (siehe insbesondere Fig. 5) weiter innen liegende Aufnahmeräume 30 und weiter außen liegende Aufnahmeräume 32 auf. Wie ebenfalls insbesondere in Fig. 5 dargestellt, können diese Aufnahmeräume in Kreissektoren S angeordnet sein, die sich von der Rotationsachse Ax in Radialrichtung R_{R} nach außen erstrecken. Diese Kreissektoren S sind bei dieser Ausführungsform optional gleichmäßig über den Umfang der Klauenkupplung verteilt. Pro Kreissektor S sind hier jeweils ein innen liegender Aufnahmeraum 30 und ein außen liegender Aufnahmeraum 32 ausgebildet. Es sind auch andere Anordnungen und Anordnungszahlen denkbar.

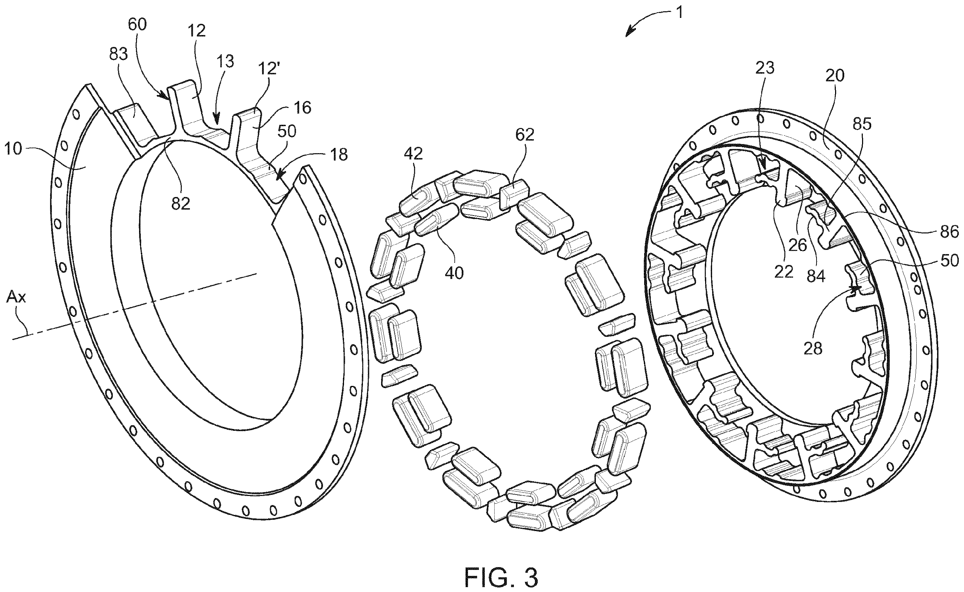

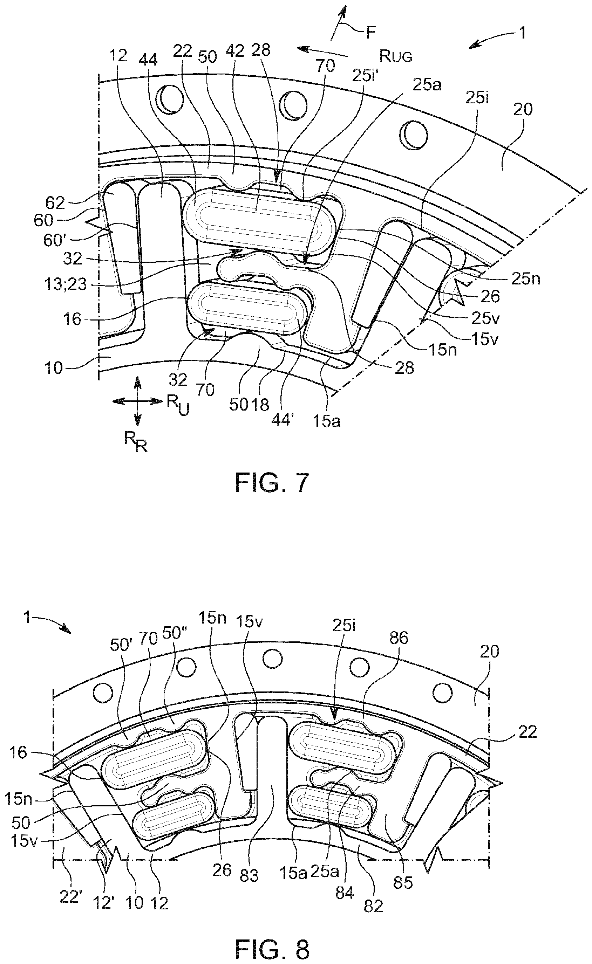

Wie ebenfalls dargestellt, ist es denkbar, dass eine Mehrzahl der Aufnahmeräume 30, 32 sich in Umfangsrichtung Ru länger erstreckt als in Radialrichtung R_{R}. Auch ist es denkbar, dass die weiter außen liegenden Aufnahmeräume länger sind als die weiter innen liegenden Aufnahmeräume. Selbiges gilt für die in den Aufnahmeräumen anordbaren Druckkörper. Hier sind beispielsweise die weiter außen liegenden Drucckörper 42 länger als die weiter innen liegenden Druckkörper 40. Grundsätzlich ist es denkbar, dass die Druckkörper in Umfangsrichtung Ru länger sind als in Radialrichtung R_{R}. Sie weisen insbesondere eine längliche Volumenkörpergeometrie und insbesondere eine Quadergeometrie mit abgerundeten Stirnseiten 44 auf. Diese Stirnseiten können derart gebogen oder dergleichen spitzzulaufend ausgebildet sein, dass diese an Druckkörper-Lagerflächen 16, 26 (siehe Fig. 7 und 8) der ersten Klauen 12 und/oder der zweiten Klauen 22 entlang einer Achse koaxial zur Rotationsachse Ax (siehe beispielsweise Fig. 3) liniengelagert sind. Es ist denkbar, dass beim Anliegen einer Pressungskraft zwischen ersten und zweiten Klauen diese Linienlagerung verbreitert wird. Dies resultiert aus der Verformung der Druckkörper.

Bei dieser Ausführungsform weist optional eine Mehrzahl der ersten Klauen 12 und/oder der zweiten Klauen 22 Wandelemente 82-86 (siehe Figs 2 und 8) auf, die sich in Radialrichtung R_{R} und/oder in Umfangsrichtung Ru erstrecken. Diese Wandelemente sind optional miteinander verbunden. Es bildet sich, wie hier dargestellt, beispielsweise eine gewinkelte Wandelementstruktur, die im Zusammenspiel mit korrespondierend ausgeführten Klauen des anderen Kupplungselements die jeweiligen Aufnahmetaschen bildet. Dabei ist es denkbar, dass eine Mehrzahl an Aufnahmeräumen in Radialrichtung R_{R} beidseitig durch wenigstens zwei erste Klauen 14 bzw. Wandelemente der Klauen 14 gebildet werden. Dieses ist bei dieser Ausführungsform nicht dargestellt. Vielmehr werden hier eine Mehrzahl an Aufnahmeräumen 30 durch wenigstens eine erste Klaue 14 und wenigstens eine zweite Klaue 42 in Radialrichtung begrenzt (siehe beispielsweise Fig. 8). Es kann auch möglich sein, dass eine Mehrzahl an Aufnahmeräumen 32 in Radialrichtung R_{R} beidseitig durch wenigstens zwei erste Klauen oder wenigstens zwei zweite Klauen 24 begrenzt wird. Dieses ist hier der Fall. Im Detail bilden Wandelemente der zweiten Klauen 22, in Radialrichtung betrachtet, Aufnahmeräume 32.

In Umfangsrichtung Ru aufeinanderfolgend werden diese Aufnahmeräume dann wieder durch erste und zweite Klauen gebildet, die relativ zueinander bewegbar sind, um die zwischengeordneten Druckkörper zusammenzupressen.

Insbesondere in Fig. 7 dargestellt, sind optional bei einer Mehrzahl der ersten Klauen 12 Wandflächen und insbesondere vorauslaufende Wandflächen 15v vorgesehen, die als erste Druckkörper-Lagerflächen 16 ausgebildet sind. Bei einer Mehrzahl der zweiten Klauen sind optional Wandflächen und insbesondere nachlaufende Wandflächen 25n vorgesehen, die als zweite Druckkörper-Lagerflächen 26 ausgebildet sind. Die Druckkörper-Lagerflächen 16, 26 sind optional derart zueinander ausgerichtet, dass sie sich, beim Anliegen des zu übertragenden Drehmoments M, unter Zusammenpressen eines zwischen den Druckkörper-Lagerflächen 16, 26 kraftgekoppelten Druckkörpers 40, 42 aufeinander zu bewegen.

Auch ist es denkbar, dass bei einer Mehrzahl der ersten Klauen 12 Wandflächen und insbesondere nach außen weisende Wandflächen 15a vorgesehen sind, die als erste Druckkörper-Führungsflächen 18 ausgebildet sind (siehe ebenfalls Fig. 7). Auch können bei einer Mehrzahl an zweiten Klauen 22 Wandflächen und insbesondere nach außen weisende Wandflächen 25a bzw. nach innen weisende Wandflächen 25i vorgesehen sein, die als zweite Druckkörper-Führungsflächen 28 ausgebildet sind. Die Druckkörper-Führungsflächen 18, 28 sind optional derart zueinander ausgerichtet, dass sie sich beim Anliegen eines zu übertragenden Drehmoments M relativ zueinander in Umfangsrichtung Ru bewegen. Bei dieser Ausführungsform können sich die gegenüberliegenden Druckkörper-Führungsflächen entlang der Kreisbahn in Umfangsrichtung bewegen.

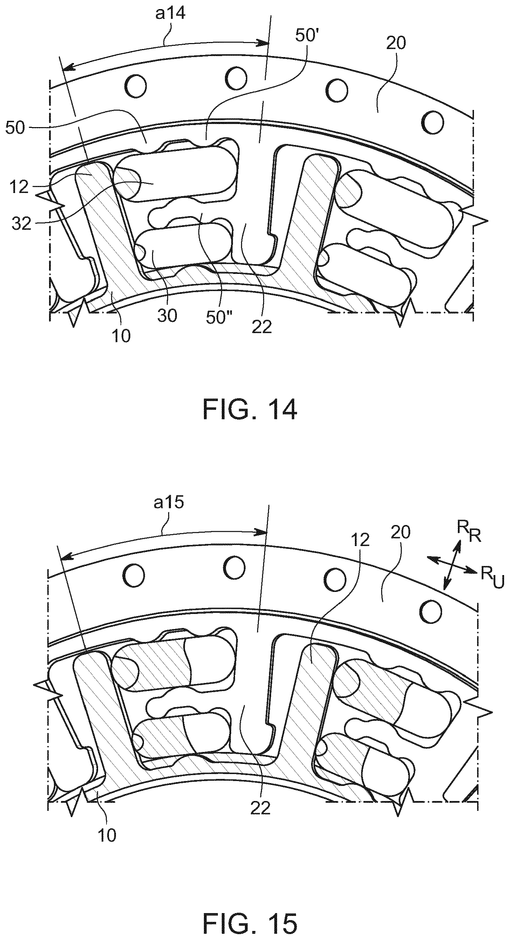

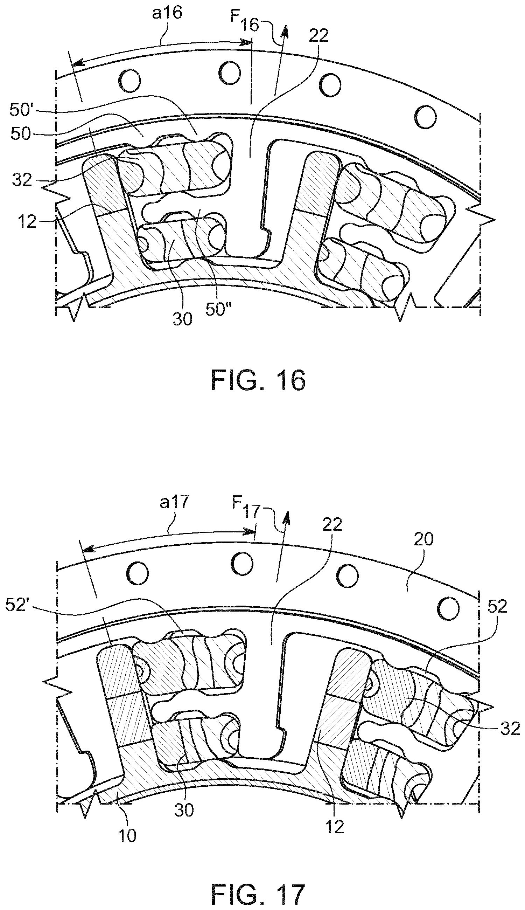

Bei diese Ausführungsform ist optional auch eine Mehrzahl an Aufnahmeräumen 30, 32 als sich in Umfangsrichtung Ru erstreckende Aufnahmetaschen ausgebildet, aus denen die dort eingesetzten Druckkörper 40, 42 in Umfangsrichtung R_{UG}, die entgegen dem zu übertragenden Moment M wirkt, hervorstehen, sodass sie beim Einwirken des Drehmoments M zwischen ersten Klauen und zweiten Klauen zusammengedrückt werden. Dies ist im Detail in Fig. 7 dargestellt. Der Kompressionsvorgang ist in den Figuren 14 - 17 im Detail dargestellt.

Wie erwähnt umfassen bei dieser Ausführungsform die ersten Klauen unter anderem an radial sich nach außen erstreckenden Wandelementen 83 und sich in Umfangsrichtung erstreckenden Wandelementen 82. Die zweiten Klauen 22 weisen dagegen eine Mehrzahl sich in Umfangsrichtung erstreckende Wandelemente 84, 86 sowie ein sich in Radialrichtung erstreckendes Wandelement 85 auf.

Ebenfalls in Fig. 7 dargestellt ist, dass eine Mehrzahl der ersten Klauen 12 und/oder der zweiten Klauen 22 Wandflächen 15, 25 aufweist, die die Aufnahmeräume begrenzen, und die sich optional in koaxial zur Rotationsachse Ax verlaufenden Ebenen erstrecken. Auch ist es denkbar, dass eine Mehrzahl der ersten Klauen und/oder zweiten Klauen Wandflächen aufweist, die die Aufnahmeräume begrenzen, und die sich in Radial- oder in Umfangsrichtung verlaufenden Ebenen erstrecken. Beides ist bei der hier dargestellten Ausführungsform gegeben. Hier weisen die ersten Klauen 12 nach außen weisende Wandflächen 15a und vorauslaufende Wandflächen 15v bzw. nachlaufende Wandflächen 15n auf. Komplementär dazu weisen die zweiten Klauen 22 vorauslaufende Wandflächen 25v und nachlaufende Wandflächen 25n sowie nach innen weisende Wandflächen 25i und nach außen weisende Wandflächen 25a auf. Die Wandflächen sind optional an Wandelementen 82-85 ausgebildet.

Die Aufnahmeräume sind dabei optional durch zueinander komplementäre Wandflächen der ersten Klauen und/oder Wandflächen der zweiten Klauen begrenzt. Wie bereits erwähnt, können die Wandflächen in Radialrichtung nach innen und, korrespondierend dazu, in Radialrichtung R_{R} gegenüberliegend nach außen weisen.

Bei dieser Ausführungsform werden Aufnahmeräume durch Wandflächen einer Klaue, beispielsweise die weiter außen liegenden Aufnahmeräume 32, durch die zweiten Klauen 22 in Radialrichtung begrenzt. Zudem gibt es Aufnahmeräume, hier die weiter innen liegenden Aufnahmeräume 30, die durch zwei korrespondierend ausgeführte Wandelemente der Klauen 12 und 22 in Radialrichtung begrenzt werden.

Bei dieser Ausführungsform weist optional eine Mehrzahl der ersten Klauen und/oder zweiten Klauen Führungselemente 50 auf, über die die Druckkörper 40, 42 in den Aufnahmeräumen 30, 32 entlang einer Achse koaxial zur Rotationsachse Ax liniengelagert sind. Optional sind eine Mehrzahl der Führungselemente 50 koaxial zur Rotationsachse Ax erstreckend ausgebildet. Diese Führungselemente bilden bei dieser Ausführungsform Linienlager, auf denen die Druckkörper, insbesondere orthogonal zur Erstreckungsrichtung, der Führungselemente entlanggleiten können. Darüber hinaus werden durch die Führungselemente Lüftungskanäle 70 gebildet. Die eine zuverlässige Kühlung der Klauenkupplung erlauben.

Es ist zudem denkbar, dass bei einwirkenden Fliehkräften F, wie sie beispielsweise in Fig. 7 dargestellt sind, die Druckkörper derart verbogen werden, dass sie eine Kreisbahn aufnehmen, die im Wesentlichen entlang der Umfangsrichtung Ru entspricht. Eine entsprechende Verformung der radial nach außen und innen weisenden Wände des Druckkörpers ist exemplarisch in Fig. 8 dargestellt.

Auch dargestellt ist, dass die Führungselemente optional an den Wandflächen 15a, 25a, 25i ausgebildet sind, die sich in Umfangsrichtung Ru erstrecken bzw. nach innen bzw. nach außen, in Bezug auf die Radialrichtung Ru weisen. Auch dargestellt ist die Möglichkeit, dass eine Mehrzahl an radial nach innen weisenden Wandflächen 25i eines Aufnahmeraums 30, 32 eine größere Anzahl an Führungselementen ausgebildet ist als an korrespondierenden radial nach außen weisenden Wandflächen 15a, 25a des Aufnahmeraums. Auf diese Besonderheit und mögliche Ausführungsformen wurde bereits zuvor im einleitenden Teil im Detail eingegangen.

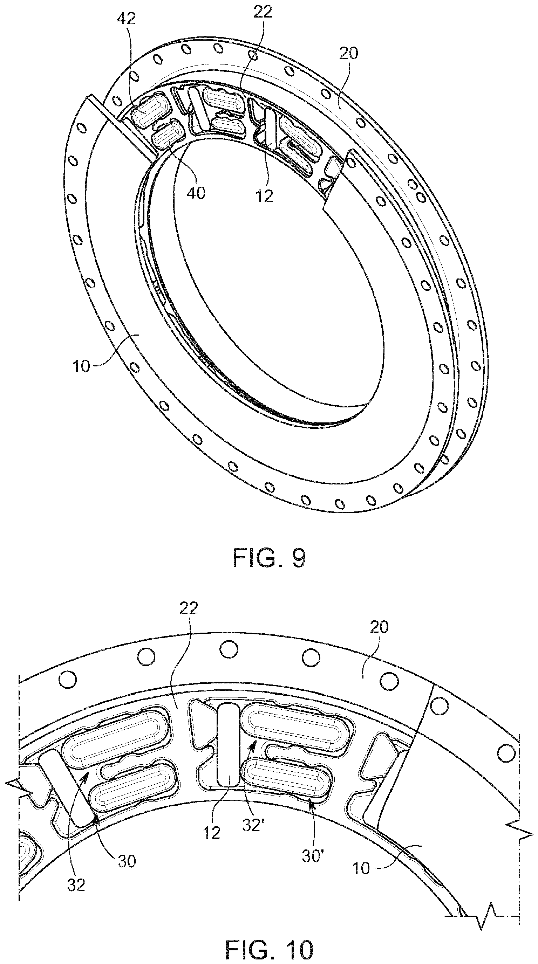

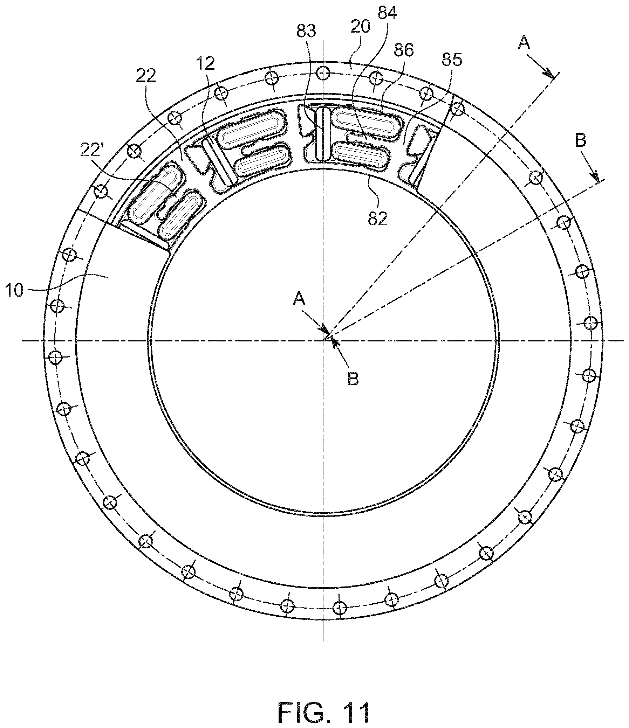

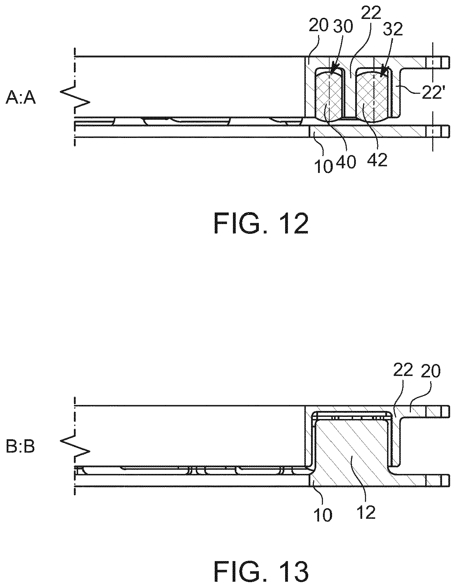

Die Figs. 9 bis 13 zeigen eine weitere Ausführungsform der erfindungsgemäßen Klauenkupplung, die in ihrem grundsätzlichen Aufbau und der Wirkungsweise im Wesentlichen der zuvor beschriebenen Ausführungsform entspricht. Jedoch sind hier die ersten bzw. zweiten Klauen unterschiedlich ausgebildet. Im Detail weist hier das zweite Kupplungselement 20 zweite Klauen 22 auf, die mit entsprechenden daran ausgebildeten Wandelementen 82, 83, 84, 85 jeweils zwei Aufnahmeräume für Druckkörper 40, 42 bilden. In Umfangsrichtung weisend, werden die durch diese Wandelemente gebildeten Aufnahmeräume 32, 30 durch die ersten Klauen 22 bzw. deren Wandelemente 83 begrenzt.

Die Figs. 14 - 17 zeigen den Kompressionsvorgang von Druckkörpern 30, 32 bzw. die Relativauslenkung eines ersten Kupplungselementes 10 relativ zum zweiten Kupplungselement 20, beim Anlegen des in Fig. 1 dargestellten Drehmoments M. Die hier dargestellte Ausführungsform der Klauenkupplung ist ähnlich der in Fig. 2 dargestellten Ausführungsform. Fig. 14 zeigt den Beginn der Relativauslenkung, die weiteren Figs. das Zunehmen dieser Auslenkung. Erkennbar ist, wie sich die ersten Klauen 10 bzw. Wandelemente davon auf die zweiten Klauen 20 bzw. Wandelemente davon zubewegen und den Relativabstand a unter Kompression der Druckkörper verringern.

Erkennbar ist, dass hier Führungselemente 50, insbesondere beim Anliegen eines Drehmoments und/oder einer resultierenden Fliehkraft F an den Druckkörpern, in Teilbereiche des Druckkörpers eingepresst werden. Es ist auch erkennbar, dass die Druckkörper in Zwischenräume 52 zwischen die Führungselemente eingepresst werden. Es ist denkbar, dass das Einpressen derart erfolgt, dass sich ein Widerstand gegen eine Pressung und/oder Bewegung der Druckkörper bzw. Druckkörperteile, beispielsweise bei einer Kompression derselben, in Umfangsrichtung Ru sukzessive erhöht, je stärker der Druckkörper in Umfangsrichtung komprimiert wird und/oder je stärker die Führungselemente in den Druckkörper eingepresst werden bzw. der Druckkörper in die Zwischenräume eingepresst wird.

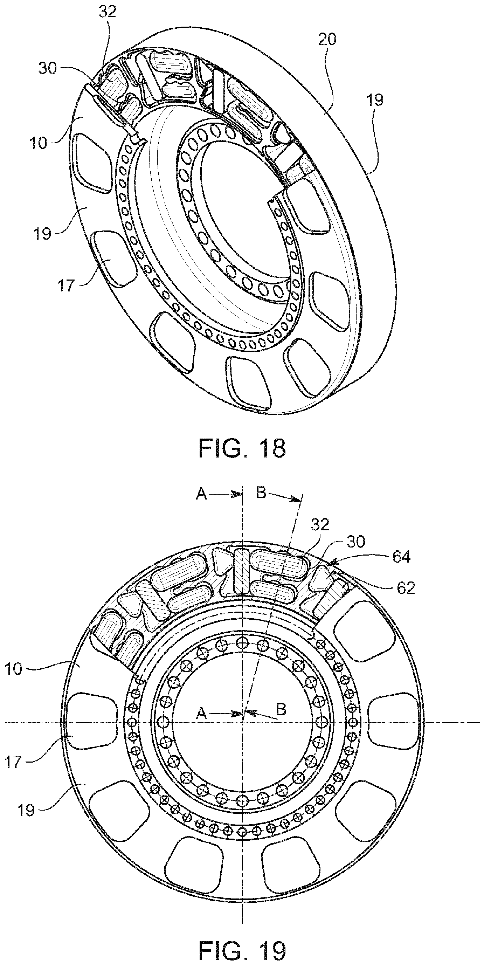

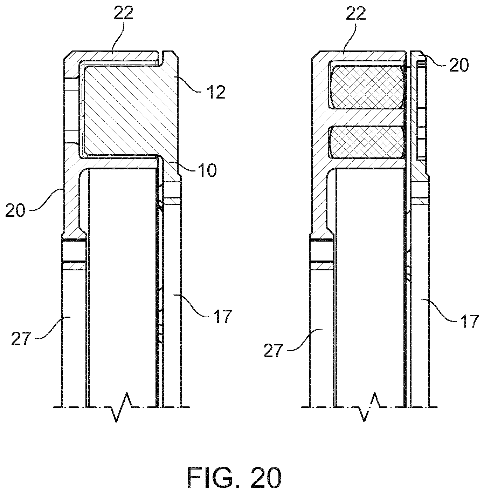

Die Figs. 18 -20 zeigen Darstellungen einer weiteren Ausführungsform der Klauenkupplung. Sie kann im Wesentlichen den Ausführungsformen gemäß Figs. 2 oder 18 entsprechen. Erkennbar ist, dass zur Gewichtsreduktion und zur Verbesserung der thermischen Eigenschaften, und insbesondere der Kühlung der Druckkörper 30, 32, im ersten und/oder zweiten Kupplungselement Rücksprünge und/oder Ausnehmungen vorgesehen werden können, die die Materialstärke in dem jeweiligen Bereich im Vergleich zu umgebenden Bereichen reduzieren. Bei dieser Ausführungsform sind beispielsweise Rücksprünge in Bodenelementen der Kupplungselemente 10, 20 vorgesehen. Es können natürlich auch Durchbrücke und/oder Materialreduzierte in entsprechenden Bereichen der Klauenkupplung ausgebildet werden.

### Bezugszeichen

- 1: Klauenkupplung
- 2: Antriebsmittel
- 3: Antriebswelle
- 4: Abtriebsmittel
- 5: Abtriebswelle
- 10: erstes Kupplungselement
- 12: erste Klaue
- 13: erster Zwischenraum
- 14: Wandelement
- 15: Wandfläche
- 15a: nach außen weisende Wandfläche
- 15v: vorauslaufende Wandfläche
- 15n: nachlaufende Wandfläche
- 16: Druckkörper-Lagerfläche
- 17: Bodenelement
- 18: Druckkörper-Führungsfläche
- 19: Rücksprung
- 20: zweites Kupplungselement
- 22: zweite Klaue
- 23: zweiter Zwischenraum
- 25: Wandfläche
- 25a: nach außen weisende Wandfläche
- 25i: nach innen weisende Wandfläche
- 25v: vorauslaufende Wandfläche
- 25n: nachlaufende Wandfläche
- 26: Druckkörper-Lagerfläche
- 27: Bodenelement
- 28: Druckkörper-Führungsfläche
- 29: Rücksprung
- 30: Aufnahmeraum
- 32: Aufnahmeraum
- 40: Druckkörper
- 42: Druckkörper
- 44: Stirnseite
- 50: Führungselement
- 60: Rückschlag-Lagerfläche
- 62: Dämpfungskörper
- 64: Aufnahme
- 70: Führungskanal
- 82: Wandelement
- 83: Wandelement
- 84: Wandelement
- 85: Wandelement
- 86: Wandelement

- Ax: Rotationsachse
- M: zu übertragendes Drehmoment
- M_{R}: Rückstellmoment
- R_{R}: Radialrichtung
- S: Kreissektor
- U₁: erster Umfang
- U₂: zweiter Umfang
- U_{R}: Umfangsrichtung

## Patentansprüche

1. Elastische, um eine Rotationsachse Ax rotierbare Klauenkupplung (1) zur Übertragung eines, um die Rotationsache wirkenden Drehmoments M, von einem Antriebsmittel (2) auf ein Abtriebsmittel (4), mit:
einem ersten Kupplungselement (10), das über einen ersten Umfang U₁ verteilte, hervorstehende erste Klauen (12) und, von diesen gebildete erste Zwischenräume (13) aufweist, und
einem relativ zum ersten Kupplungselement drehbar rotierbaren zweiten Kupplungselement (20), das über einen zweiten Umfang U₂ verteilte, hervorstehende zweite Klauen (22) und, von diesen gebildete, zweite Zwischenräume (23) aufweist, wobei die ersten Klauen (12) und die zweiten Klauen (22) miteinander in wechselseitigem Eingriff stehen und Aufnahmeräume (30; 32) begrenzen, in denen elastische Druckkörper (40, 42) derart einsetzbar sind, dass sie das erste Kupplungselement (10) elastisch, drehmomentübertragend mit dem zweiten Kupplungselement (20) kraftkoppeln,
wobei
eine Mehrzahl der ersten Klauen (12) und zweiten Klauen (22) derart ausgebildet ist, dass eine Mehrzahl an Aufnahmeräumen (30; 32) in Bezug auf die Rotationsachse Ax in Umfangsrichtung Ru und in Radialrichtung R_{R} aufeinanderfolgend angeordnet ist,
**dadurch gekennzeichnet, dass** eine Mehrzahl der ersten Klauen (12) und/oder zweiten Klauen (22) Führungselemente (50) aufweist, über die die Druckkörper (40; 42) in den Aufnahmeräumen (30; 32) entlang einer Achse coaxial zur Rotationsachse Ax liniengelagert sind, wobei eine Mehrzahl der Führungselemente (50) aus Wandflächen und insbesondere Druckkörper-Lagerflächen der ersten Klauen (12) und/oder der zweiten Klauen (22) hervorsteht.

2. Klauenkupplung nach Anspruch 1,
**dadurch gekennzeichnet, dass**
eine Mehrzahl der ersten Klauen (12) und zweiten Klauen (22) in Radialrichtung R_{R} innenliegende Aufnahmeräume (30) und radial weiter außenliegende Aufnahmeräume (32) definiert.

3. Klauenkupplung nach Anspruch 1 oder 2,
**dadurch gekennzeichnet, dass**
die Klauenkupplung in eine Mehrzahl an Kreissektoren S, insbesondere identische Kreissektoren aufgeteilt ist, die sich von der Rotationsachse Ax in Radialrichtung R_{R} nach außen erstrecken und, insbesondere gleichmäßig, über den Umfang der Klauenkupplung verteilt sind, wobei pro Kreissektor S jeweils ein innenliegender Aufnahmeraum (30) und ein außenliegender Aufnahmeraum (32) ausgebildet ist.

4. Klauenkupplung nach einem der vorhergehenden Ansprüche,
**dadurch gekennzeichnet, dass**
eine Mehrzahl an Aufnahmeräumen (30; 32) in Radialrichtung R_{R} beidseitig durch wenigstens zwei erste Klauen (14) oder wenigstens zwei zweite Klauen (24) begrenzt wird, und/oder eine Mehrzahl an Aufnahmeräumen (30; 32) durch wenigstens eine erste Klauen (14) und wenigstens eine zweite Klauen (24) begrenzt wird.

5. Klauenkupplung nach einem der vorhergehenden Ansprüche,
**dadurch gekennzeichnet, dass**
eine Mehrzahl an Aufnahmeräumen (30; 32) sich in Umfangsrichtung Ru länger erstreckt als in Radialrichtung R_{R}.

6. Klauenkupplung nach einem der vorhergehenden Ansprüche,
**dadurch gekennzeichnet, dass**
eine Mehrzahl der ersten Klauen (12) und/oder zweiten Klauen (22), als Wandelemente (14; 24) ausgebildet sind, die sich in Radialrichtung R_{R} und/oder in Umfangsrichtung Ru erstrecken.

7. Klauenkupplung nach einem der vorhergehenden Ansprüche,
**dadurch gekennzeichnet, dass**
eine Mehrzahl der ersten Klauen (12) und/oder zweiten Klauen (22), Wandflächen (15a; 15v; 15n; 25a; 25i; 25v; 25n) aufweist, die die Aufnahmeräume (30; 32) begrenzen, und die sich in coaxial zur Rotationsachse Ax verlaufenden Ebenen erstrecken, und/oder, dass
eine Mehrzahl der ersten Klauen (12) und/oder zweiten Klauen (22), Wandflächen (15a; 15v; 15n; 25a; 25i; 25v; 25n) aufweist, die die Aufnahmeräume (30; 32) begrenzen, und die sich in radial oder in Umfangsrichtung verlaufenden Ebenen erstrecken.

8. Klauenkupplung nach einem der vorhergehenden Ansprüche,
**dadurch gekennzeichnet, dass**
bei einer Mehrzahl der ersten Klauen (12) Wandflächen (15v) vorgesehen sind, die als erste Druckkörper-Lagerflächen (16) ausgebildet sind, und bei einer Mehrzahl der zweiten Klauen (22) Wandflächen (25n) vorgesehen sind, die als zweite Druckkörper-Lagerflächen (26) ausgebildet sind, und die derart zueinander ausgerichtet sind, dass sie sich, beim Anliegen eines zu übertragenden Drehmoments M, unter Zusammenpressen eines zwischen den Druckkörper-Lagerflächen (16; 26) kraftgekoppelten Druckkörpers (40; 42) aufeinander zubewegen.

9. Klauenkupplung nach einem der vorhergehenden Ansprüche,
**dadurch gekennzeichnet, dass**
bei einer Mehrzahl der ersten Klauen (12) Wandflächen (15a) vorgesehen sind, die als erste Druckkörper-Führungsflächen (18) ausgebildet sind, und bei einer Mehrzahl an zweiten Klauen (22) Wandflächen (25a; 25i) vorgesehen sind, die als zweite Druckkörper-Führungsflächen (28) ausgebildet sind, und die derart zueinander ausgerichtet sind, dass sie sich, beim Anliegen eines zu übertragenden Drehmoments M relativ zueinander in Umfangsrichtung Ru bewegen.

10. Klauenkupplung nach einem der vorhergehenden Ansprüche,
**dadurch gekennzeichnet, dass** eine Mehrzahl der Aufnahmeräume (30; 32) durch zueinander komplementäre Wandflächen (15a) der ersten Klauen (12) und/oder Wandflächen (25a; 25i) der zweiten Klauen (22) begrenzt wird, wobei die Wandflächen in Radialrichtung nach innen und, korrespondierend dazu, in Radialrichtung R_{R} gegenüberliegenden nach außen weisen.

11. Klauenkupplung nach einem der vorhergehenden Ansprüche,
**dadurch gekennzeichnet, dass**
eine Mehrzahl der Druckkörper (40; 42) an in Umfangsrichtung Ru vorauslaufenden und/oder nachlaufenden Stirnseiten (44) derart gebogen oder dergleichen spitz zulaufend ausgebildet ist, dass diese an den Druckkörper-Lagerflächen (16; 26) der ersten Klauen (12) und/oder der zweiten Klauen (22) entlang einer Achse coaxial zur Rotationsachse Ax liniengelagert sind.

12. Klauenkupplung nach einem der vorhergehenden Ansprüche,
**dadurch gekennzeichnet, dass**
eine Mehrzahl der Führungselemente (50) sich coaxial zur Rotationsachse Ax erstreckt.

13. Klauenkupplung nach einem der vorhergehenden Ansprüche,
**dadurch gekennzeichnet, dass**
sich die Führungselemente (50) entlang einer Achse coaxial zur Rotationsachse Ax erstrecken.

14. Klauenkupplung nach einem der vorhergehenden Ansprüche,
**dadurch gekennzeichnet, dass**
die Führungselemente (50) an Wandflächen (15a; 25a; 25i) ausgebildet ist, die sich in Umfangsrichtung Ru erstrecken.

15. Klauenkupplung nach einem der vorhergehenden Ansprüche,
**dadurch gekennzeichnet, dass**
an einer Mehrzahl an radial nach innen weisenden Wandflächen (15a; 25i) eines Aufnahmeraumes (30; 32) eine größere Anzahl an Führungselementen (50) ausgebildet ist, als an korrespondierenden radial nach außen weisenden Wandflächen (25a) des Aufnahmeraumes (30; 32), und insbesondere, dass an einer Mehrzahl an radial nach innen weisenden Wandflächen (15a; 25i) eines Aufnahmeraumes eine Anzahl n Führungselemente (50) ausgebildet ist, und an korrespondierenden radial nach außen weisenden Wandelementen (25a) des Aufnahmeraumes (30; 32) eine Anzahl n-x, wobei n eine ganze Zahl > 0, x eine ganze ungerade Zahl > 0, n > 2 und x < n ist.

16. Klauenkupplung nach einem der vorhergehenden Ansprüche,
**dadurch gekennzeichnet, dass**
eine Mehrzahl der Druckkörper (40; 42) in einem Zustand in dem sie in den Aufnahmeräumen (30; 32) eingesetzt und durch keine über die Klauen (12; 22) einwirkende Druckkraft belastet sind und/oder durch eine über die Klauen (12; 22) einwirkende Druckkraft belastet sind, in Umfangsrichtung Ru länglich, insbesondere elliptisch, bohnenförmig oder dergleichen langestreckt abgerundet geformt sind.

17. Klauenkupplung nach einem der vorhergehenden Ansprüche,
**dadurch gekennzeichnet, dass**
in Bezug auf die Umfangsrichtung Ru eine Mehrzahl der Druckkörper (40), die in radial innenliegenden Aufnahmeräumen (30) angeordnet ist, in Umfangsrichtung Ru kürzer ist, als eine Mehrzahl an Druckkörpern (42), die in radial weiter außenliegenden Aufnahmeräumen (42) angeordnet sind.

18. Klauenkupplung nach einem der vorhergehenden Ansprüche,
**dadurch gekennzeichnet, dass**
die ersten Klauen (12) und zweiten Klauen (22) Rückschlag-Lagerflächen (60) aufweisen, die derart zueinander ausgerichtet sind, dass sie sich, beim Anliegen eines dem zu übertragenden Drehmoment M entgegengesetzt wirkenden Rückschlagmomentes M_{R}, unter Zusammenpressen eines zwischen den Rückschlag-Lagerflächen (60) kraftgekoppelten Dämpfungskörpers (62) aufeinander zubewegen.

## Claims

1. Elastic claw clutch (1), rotatable about a rotation axis Ax, for transmitting a torque M acting about the rotation axis, from a driving means (2) to an output means (4), comprising:
a first coupling element (10) that comprises protruding first claws (12) that are spread out around a first circumference U₁, as well as first intermediate gaps (13) formed by these claws, and
a second coupling element (20), rotatable relative to the first coupling element, wherein the second coupling element comprises protruding second claws (22) that are spread out around a second circumference U₂, as well as second intermediate gaps (23) formed by these claws, wherein the first claws (12) and the second claws (22) mutually engage with one another and delimit receiving spaces (30; 32) in which elastic pressure bodies (40; 42) can be placed in such a way that they couple the first coupling element (10) with the second coupling element (20) in an elastic and torque-transmitting way,
wherein
a plurality of the first claws (12) and of the second claws (22) is formed in such a way that a plurality of receiving spaces (30; 32) is disposed sequentially with respect to the rotation axis Ax in the circumferential direction Ru and in the radial direction R_{R},
**characterised in that**
a plurality of the first claws (12) and/or of the second claws (22) comprises guiding elements (50) with which the pressure bodies (40; 42) are linearly mounted in the receiving spaces (30; 32) along an axis that is coaxial to the rotation axis A_{X}, wherein a plurality of the guiding elements (50) protrudes from wall surfaces and especially from pressure body mounting surfaces of the first claws (12) and/or of the second claws (22).

2. Claw clutch according to claim 1,
**characterised in that**
a plurality of the first claws (12) and of the second claws (22) defines inward receiving spaces (30) in the radial direction R_{R}, as well as receiving spaces (32) that are situated more outwardly in the radial direction.

3. Claw clutch according to claim 1 or 2,
**characterised in that**
the claw clutch is divided into a plurality of circle sectors S, especially identical circle sectors that extend externally from the rotation axis Ax in the radial direction R_{R}, and that are especially spread out uniformly over the circumference of the claw clutch, wherein, for each circle sector S, a respective inward receiving space (30) and a respective outward receiving space (32) are formed.

4. Claw clutch according to any of the preceding claims,
**characterised in that**
a plurality of receiving spaces (30; 32) is delimited bilaterally in the radial direction R_{R} by at least two first claws (14) or by at least two second claws (24), and/or a plurality of receiving spaces (30; 32) is delimited by at least one first claw (14) and by at least one second claw (24).

5. Claw clutch according to any of the preceding claims,
**characterised in that**
a plurality of receiving spaces (30; 32) extends over a longer distance in the circumferential direction Ru than in the radial direction R_{R}.

6. Claw clutch according to any of the preceding claims,
**characterised in that**
a plurality of the first claws (12) and/or of the second claws (22) is formed as wall elements (14; 24) that extend in the radial direction R_{R} and/or in the circumferential direction Ru.

7. Claw clutch according to any of the preceding claims,
**characterised in that**
a plurality of the first claws (12) and/or of the second claws (22) comprises wall surfaces (15a; 15v; 15n; 25a; 25i; 25v; 25n) that delimit the receiving spaces (30; 32), and that extend in planes that are coaxial to the rotation axis A_{X}, and/or that
a plurality of the first claws (12) and/or of the second claws (22) comprises wall surfaces (15a; 15v; 15n; 25a; 25i; 25v; 25n) that delimit the receiving spaces (30; 32), and that extend in radially or circumferentially running planes.

8. Claw clutch according to any of the preceding claims,
**characterised in that**
for a plurality of the first claws (12) wall surfaces (15v) are foreseen that are formed as first pressure body mounting surfaces (16), and
for a plurality of the second claws (22) wall surfaces (25n) are foreseen that are formed as second pressure body mounting surfaces (26), and
wherein these are mutually aligned in such a way that, when a torque M is present that needs to be transmitted, they carry out an approaching movement, thereby forcibly compressing a pressure body (40; 42) that is kept between the pressure body mounting surfaces (16; 26).

9. Claw clutch according to any of the preceding claims,
**characterised in that**
for a plurality of the first claws (12) wall surfaces (15a) are foreseen that are formed as first pressure body guiding surfaces (18), and
for a plurality of the second claws (22) wall surfaces (25a; 25i) are foreseen that are formed as second pressure body guiding surfaces (28), and wherein these are mutually aligned in such a way that, when a torque M is present that needs to be transmitted, they carry out an approaching movement in the circumferential direction Ru.

10. Claw clutch according to any of the preceding claims,
**characterised in that**
a plurality of the receiving spaces (30; 32) is delimited by mutually complementary wall surfaces (15a) of the first claws (12) and/or wall surfaces (25a; 25i) of the second claws (22), wherein the wall surfaces point inwardly in the radial direction and, correspondingly thereto, at the opposite side point outwardly in the radial direction R_{R}.

11. Claw clutch according to any of the preceding claims,
**characterised in that**
a plurality of the pressure bodies (40; 42) situated in the circumferential direction Ru leading and/or trailing end sides (44) is curved in such a way or is similarly converging in such a way that the pressure bodies are linearly mounted on the pressure body mounting surfaces (16; 26) of the first claws (12) and/or of the second claws (22) along an axis that is coaxial to the axis of rotation Ax.

12. Claw clutch according to any of the preceding claims,
**characterised in that**
a plurality of the guiding elements (50) extends coaxially with respect to the rotation axis Ax.

13. Claw clutch according to any of the preceding claims,
**characterised in that**
the guiding elements (50) extend along an axis that is coaxial with respect to the rotation axis A_{X}.

14. Claw clutch according to any of the preceding claims,
**characterised in that**
the guiding elements (50) are formed at wall surfaces (15a; 25a; 25i) that extend in the circumferential direction Ru.

15. Claw clutch according to any of the preceding claims,
**characterised in that**
at a plurality of inwardly pointing wall surfaces (15a; 25i) of a receiving space (30; 32) a larger number of guiding elements (50) is formed than at corresponding outwardly pointing wall surfaces (25a) of the receiving space (30; 32), and especially that at a plurality of inwardly pointing wall surfaces (15a; 25i) of a receiving space a number n of guiding elements (50) is formed, and at corresponding outwardly pointing wall elements (25a) of the receiving space (30; 32) a number n-x, wherein n is an integer > 0, x is an odd integer > 0, n > 2, and x < n.

16. Claw clutch according to any of the preceding claims,
**characterised in that**
a plurality of the pressure bodies (40; 42), in a situation in which they are placed in the receiving spaces (30; 32) and are not subjected to a compressive force that is transmitted via the claws (12; 22) and/or are subjected to a compressive force that is transmitted via the claws (12; 22), is formed elongated and rounded in the circumferential direction Ru, especially in the form of an ellipse, in the form of a kidney, or similarly.

17. Claw clutch according to any of the preceding claims,
**characterised in that**
with respect to the circumferential direction Ru, a plurality of the pressure bodies (40), placed in receiving spaces (30) that are disposed radially inward, is shorter in the circumferential direction Ru than a plurality of pressure bodies (42), placed in receiving spaces (42) that is disposed radially more outward.

18. Claw clutch according to any of the preceding claims,
**characterised in that**
the first claws (12) and second claws (22) comprise kickback mounting surfaces (60) that are mutually aligned in such a way that, when a kickback torque MR is present that acts against the torque M that needs to be transmitted, they carry out an approaching movement, compressing a damping body (62) that is forcibly kept between the kickback mounting surfaces (60).

## Revendications

1. Accouplement à griffes (1) élastique pouvant tourner autour d'un axe de rotation Aₓ, pour la transmission d'un couple M agissant autour de l'axe de rotation, d'un moyen d'entraînement (2) à un moyen de sortie (4), avec :
un premier élément d'accouplement (10), qui présente des premières griffes (12) saillantes réparties sur une première circonférence U₁ et des premiers espaces intermédiaires (13) formés par celles-ci, et
un deuxième élément d'accouplement (20) pouvant tourner par rapport au premier élément d'accouplement, qui présente des deuxièmes griffes (22) saillantes réparties sur une deuxième circonférence U₂ et des deuxièmes espaces intermédiaires (23) formés par celles-ci, dans lequel les premières griffes (12) et
les deuxièmes griffes (22) sont en prise réciproque les unes avec les autres et
délimitent des espaces de réception (30 ; 32), dans lesquels des corps de pression (40, 42) élastiques peuvent être insérés de telle sorte qu'ils accouplent par la force le premier élément d'accouplement (10) de manière élastique au deuxième élément d'accouplement (20) avec transmission du couple, dans lequel une pluralité des premières griffes (12) et deuxièmes griffes (22) est réalisée de telle sorte qu'une pluralité d'espaces de réception (30 ; 32) sont disposés successivement par rapport à l'axe de rotation Aₓ dans la direction circonférentielle Ru et dans la direction radiale R_{R}, **caractérisé en ce que**
une pluralité des premières griffes (12) et/ou deuxièmes griffes (22) présente des éléments de guidage (50), par l'intermédiaire desquels les corps de pression (40 ; 42) sont logés linéairement dans les espaces de réception (30 ; 32) le long d'un axe coaxial à l'axe de rotation Aₓ, dans lequel une pluralité des éléments de guidage (50) fait saillie de surfaces de paroi et en particulier de surfaces de logement de corps de pression des premières griffes (12) et/ou des deuxièmes griffes (22).

2. Accouplement à griffes selon la revendication 1,
**caractérisé en ce que**
une pluralité des premières griffes (12) et deuxièmes griffes (22) définit des espaces de réception (30) situés à l'intérieur dans la direction radiale R_{R} et des espaces de réception (32) situés radialement plus à l'extérieur.

3. Accouplement à griffes selon la revendication 1 ou 2, **caractérisé en ce que** l'accouplement à griffes est divisé en une pluralité de secteurs circulaires S, en particulier de secteurs circulaires identiques, qui s'étendent vers l'extérieur à partir de l'axe de rotation Aₓ dans la direction radiale R_{R} et sont répartis, en particulier uniformément, sur la circonférence de l'accouplement à griffes, dans lequel un espace de réception (30) situé à l'intérieur et un espace de réception (32) situé à l'extérieur sont respectivement réalisés par secteur circulaire S.

4. Accouplement à griffes selon l'une quelconque des revendications précédentes, **caractérisé en ce que**
une pluralité d'espaces de réception (30 ; 32) est délimitée dans la direction radiale R_{R} des deux côtés par au moins deux premières griffes (14) ou au moins deux deuxièmes griffes (24), et/ou une pluralité d'espaces de réception (30 ; 32) est délimitée par au moins une première griffe (14) et au moins une deuxième griffe (24).

5. Accouplement à griffes selon l'une quelconque des revendications précédentes, **caractérisé en ce que**
une pluralité d'espaces de réception (30 ; 32) s'étend de manière plus longue dans la direction circonférentielle Ru que dans la direction radiale R_{R}.

6. Accouplement à griffes selon l'une quelconque des revendications précédentes, **caractérisé en ce qu'**une pluralité des premières griffes (12) et/ou deuxièmes griffes (22) sont réalisées sous forme d'éléments de paroi (14 ; 24) qui s'étendent dans la direction radiale R_{R} ET/oudans la direction circonférentielle R_{U}.

7. Accouplement à griffes selon l'une quelconque des revendications précédentes, **caractérisé en ce que**
une pluralité des premières griffes (12) et/ou deuxièmes griffes (22) présente des surfaces de paroi (15a ; 15v ; 15n ; 25a ; 25i ; 25v ; 25n), qui délimitent les espaces de réception (30 ; 32), et qui s'étendent dans des plans s'étendant de manière coaxiale à l'axe de rotation Aₓ, et/ou que
une pluralité des premières griffes (12) et/ou deuxièmes griffes (22) présente des surfaces de paroi (15a ; 15v ; 15n ; 25a ; 25i ; 25v ; 25n), qui délimitent les espaces de réception (30 ; 32), et qui s'étendent dans des plans s'étendant radialement ou dans la direction circonférentielle.

8. Accouplement à griffes selon l'une quelconque des revendications précédentes, **caractérisé en ce que**
pour une pluralité des premières griffes (12), des surfaces de paroi (15v) sont prévues, qui sont réalisées sous forme de premières surfaces de logement de corps de pression (16), et pour une pluralité des deuxièmes griffes (22), des surfaces de paroi (25n) sont prévues, qui sont réalisées sous forme de deuxièmes surfaces de logement de corps de pression (26), et qui sont orientées les unes par rapport aux autres de telle sorte que, lors de l'application d'un couple M à transmettre, elles se rapprochent les unes des autres avec compression d'un corps de pression (40 ; 42) couplé par force entre les surfaces de logement de corps de pression (16 ; 26).

9. Accouplement à griffes selon l'une quelconque des revendications précédentes, **caractérisé en ce que**
pour une pluralité des premières griffes (12), des surfaces de paroi (15a) sont prévues, qui sont réalisées sous forme de premières surfaces de guidage de corps de pression (18), et pour une pluralité de deuxièmes griffes (22), des surfaces de paroi (25a ; 25i) sont prévues, qui sont réalisées sous forme de deuxièmes surfaces de guidage de corps de pression (28), et qui sont orientées les unes par rapport aux autres de telle sorte qu'elles se déplacent les unes par rapport aux autres dans la direction circonférentielle Ru lors de l'application d'un couple M à transmettre.

10. Accouplement à griffes selon l'une quelconque des revendications précédentes, **caractérisé en ce que**
une pluralité des espaces de réception (30 ; 32) est délimitée par des surfaces de paroi (15a) complémentaires les unes des autres des premières griffes (12) et/ou surfaces de paroi (25a ; 25i) des deuxièmes griffes (22), dans lequel les surfaces de paroi sont orientées vers l'intérieur dans la direction radiale et, de manière correspondante, vers l'extérieur dans la direction radiale R_{R} opposée.

11. Accouplement à griffes selon l'une quelconque des revendications précédentes, **caractérisé en ce que**
une pluralité des corps de pression (40 ; 42) est réalisée sur des faces frontales (44) avant et/ou arrière dans la direction circonférentielle R_{U} de manière courbée ou similaire de façon à se terminer en pointe, de telle sorte que ceux-ci sont logés linéairement sur les surfaces de logement de corps de pression (16 ; 26) des premières griffes (12) et/ou des deuxièmes griffes (22) le long d'un axe coaxial à l'axe de rotation Aₓ.

12. Accouplement à griffes selon l'une quelconque des revendications précédentes, **caractérisé en ce que**
une pluralité des éléments de guidage (50) s'étend coaxialement à l'axe de rotation Aₓ.

13. Accouplement à griffes selon l'une quelconque des revendications précédentes, **caractérisé en ce que**
les éléments de guidage (50) s'étendent le long d'un axe coaxial à l'axe de rotation Aₓ.

14. Accouplement à griffes selon l'une quelconque des revendications précédentes, **caractérisé en ce que**
les éléments de guidage (50) sont réalisés sur des surfaces de paroi (15a ; 25a ; 25i) qui s'étendent dans la direction circonférentielle Ru.

15. Accouplement à griffes selon l'une quelconque des revendications précédentes, **caractérisé en ce que**
un plus grand nombre d'éléments de guidage (50) est réalisé sur une pluralité de surfaces de paroi (15a ; 25i) d'un espace de réception (30 ; 32) orientées radialement vers l'intérieur que sur des surfaces de paroi (25a) de l'espace de réception (30 ; 32) correspondantes orientées radialement vers l'extérieur, et en particulier qu'un nombre n d'éléments de guidage (50) est réalisé sur une pluralité de surfaces de paroi (15a ; 25i) d'un espace de réception orientées radialement vers l'intérieur, et un nombre n-x sur des éléments de paroi (25a) de l'espace de réception (30 ; 32) correspondants orientés radialement vers l'extérieur, dans lequel n est un nombre entier > 0, x un nombre entier impair > 0, n > 2 et x < n.

16. Accouplement à griffes selon l'une quelconque des revendications précédentes, **caractérisé en ce que**
une pluralité des corps de pression (40 ; 42), dans un état dans lequel ils sont insérés dans les espaces de réception (30 ; 32) et ne sont pas sollicités par une force de pression agissant par l'intermédiaire des griffes (12 ; 22) et/ou sont sollicités par une force de pression agissant par l'intermédiaire des griffes (12 ; 22), sont formés de manière allongée dans la direction circonférentielle Ru, en particulier de manière arrondie et allongée de tout leur long de façon elliptique, en forme de haricot ou similaire.

17. Accouplement à griffes selon l'une quelconque des revendications précédentes, **caractérisé en ce que**
par rapport à la direction circonférentielle R_{U}, une pluralité des corps de pression (40), qui est disposée dans des espaces de réception (30) situés radialement à l'intérieur, est plus courte dans la direction circonférentielle Ru qu'une pluralité de corps de pression (42), qui sont disposés dans des espaces de réception (42) situés radialement plus à l'extérieur.

18. Accouplement à griffes selon l'une quelconque des revendications précédentes, **caractérisé en ce que**
les premières griffes (12) et deuxièmes griffes (22) présentent des surfaces de logement de réaction (60), qui sont orientées les unes par rapport aux autres de telle sorte qu'elles se rapprochent les unes des autres lors de l'application d'un couple de réaction M_{R} agissant à l'opposé d'un couple à transmettre M, avec compression d'un corps d'amortissement (62) couplé en force entre les surfaces de logement de réaction (60).
